# EUROPEAN PATENT APPLICATION

(11) **EP 4 351 250 A1**
(43) Date of publication of application: **10.04.2024**
(21) Application number: 22836860.1
(22) Date of filing: 04.07.2022
(51) Int. Cl.: H04W 72/04

(54) **COMMUNICATION METHOD AND RELATED APPARATUS**

(30) Priority: 09.07.2021 CN 202110781022
(71) Applicant: Huawei Technologies Co., Ltd., Shenzhen, Guangdong 518129 (CN)
(72) Inventor: GAO, Lei, Shenzhen, Guangdong 518129 (CN); CHENG, Xingqing, Shenzhen, Guangdong 518129 (CN); WANG, Jian, Shenzhen, Guangdong 518129 (CN)
(74) Representative: MERH-IP Matias Erny Reichl Hoffmann Patentanwälte PartG mbB
(86) International application number: PCT/CN2022/103657
(87) International publication number: WO 2023/280109

(57) **Abstract**

Embodiments of this application provide a communication method and a related apparatus, applied to intelligent driving or assisted driving. The method includes: A first node sends a message on at least one of M first time domain resources. The first node receives a message on at least one of N second time domain resources. The first time domain resource is used by the first node to send a message. The second time domain resource is used by the first node to receive a message. The M first time domain resources and the N second time domain resources belong to a first transmission opportunity. A time domain resource in the first transmission opportunity is for message transmission on a first frequency hopping channel. M is an integer greater than 0, N is an integer greater than 0, and M+N>2. According to this application, resources can be saved, and communication efficiency can be improved. The method in embodiments of this application may be applied to an internet of vehicles, for example, vehicle-to-everything V2X, long term evolution-vehicle LTE-V, and vehicle-to-vehicle V2V.

## Description

This application claims priority to Chinese Patent Application No. 202110781022.6, filed with the China National Intellectual Property Administration on July 9, 2021 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

With rapid development of wireless communication technologies, the wireless communication technologies are applied to more fields. The wireless communication technologies are not merely applied to conventional voice communication, but are further used to support communication between intelligent devices with rich and diversified functions, for example, communication between intelligent devices such as smartphones, intelligent transportation devices, smart home devices, and robots.

In addition, with popularization and diversified development of the intelligent devices, there is a requirement for short-range communication between the intelligent devices in a specific communication area or range. Therefore, short-range communication technologies, for example, wireless communication technologies such as wireless fidelity (wireless fidelity, Wi-Fi), Bluetooth (Bluetooth), or ZigBee, are developed rapidly. However, currently, there are problems of high receiving and sending switching overheads and low resource utilization in the short-range communication technologies.

### SUMMARY

Embodiments of this application disclose a communication method and a related apparatus, to reduce a quantity of times of receiving and sending switching between communication apparatuses (or nodes), reduce resource overheads, improve resource utilization, and improve communication efficiency.

According to a first aspect, an embodiment of this application provides a communication method. The method includes: A first node sends a message on at least one of M first time domain resources. The first node receives a message on at least one of N second time domain resources. The first time domain resource is used by the first node to send a message. The second time domain resource is used by the first node to receive a message. The M first time domain resources and the N second time domain resources belong to a first transmission opportunity. A time domain resource in the first transmission opportunity is for message transmission on a first frequency hopping channel. M is an integer greater than 0, N is an integer greater than 0, and M+N>2.

Optionally, the first transmission opportunity successively includes the M first time domain resources and the N second time domain resources.

The communication method provided in this application can be applied to a communication domain. The communication domain includes one primary node and at least one secondary node. A node is a communication apparatus. In an existing solution, the primary node can send only one message to one secondary node each time. After receiving the message from the primary node, the secondary node can also send only one message to the primary node. If a plurality of messages need to be sent through interaction or interaction between a plurality of nodes is required, the primary node and the secondary node need to frequently switch a receiving and sending relationship, resulting in large overheads of a resource, for example, a time-frequency resource. However, in this application, a node can send and/or receive a plurality of messages to and/or from one or more nodes in one transmission opportunity. Alternatively, a node can simultaneously send and/or receive messages to and/or from a plurality of nodes. This reduces a quantity of times of receiving and sending switching, reduces overheads of the resource, for example, the time-frequency resource, and improves communication efficiency.

In a possible implementation, the first transmission opportunity further includes K second time domain resources, and K is an integer greater than 0. Before the first node sends the message on the at least one of the M first time domain resources, the method further includes: The first node receives a message on at least one of K second time domain resources.

In the foregoing implementation, the first node can first receive one or more messages from another node in the first transmission opportunity, then send one or more messages to another node in the first transmission opportunity, and next, receive one or more messages from another node in the first transmission opportunity. In other words, a plurality of messages can be exchanged between a plurality of nodes in one transmission opportunity. Compared with that in the conventional technology, this can greatly reduce resource consumption and improve communication efficiency.

In a possible implementation, M is greater than 1, and the M first time domain resources are consecutive time domain resources in the first transmission opportunity. That a first node sends a message on at least one of M first time domain resources includes: The first node sends messages on a plurality of first time domain resources.

In the foregoing implementation, one node can continuously send a plurality of messages to another node in one transmission opportunity, to reduce switching of a receiving and sending relationship, and improve communication efficiency.

In a possible implementation, N is greater than 1, and the N second time domain resources are consecutive time domain resources in the first transmission opportunity. That the first node receives a message on at least one of N second time domain resources includes: The first node receives messages on a plurality of second time domain resources.

In the foregoing implementation, one node can continuously receive a plurality of messages from another node in one transmission opportunity, to reduce switching of a receiving and sending relationship, and improve communication efficiency.

In a possible implementation, a node that communicates with the first node in the first transmission opportunity includes at least one node in a first node set.

The first node is a primary node, and the primary node is configured to manage a transmission resource for inter-node communication.

Alternatively, the first node is a node included in a second node set, and any node in the second node set is different from any node in the first node set.

Alternatively, the first node is a node in the first node set.

The first node set and the second node set are node sets in the communication domain, and each node set includes one or more nodes in the communication domain. In the foregoing implementation, three cases of the first node are provided.

Case 1: The first node is a primary node in the communication domain. In this case, one or more nodes that communicate with the first node are secondary nodes. In this case, the primary node may send a plurality of messages to the one or more secondary nodes in the first transmission opportunity, or may send messages to a plurality of nodes simultaneously in the first transmission opportunity. Compared with that in the conventional technology, this can save resources, and improve communication efficiency.

Case 2: Both the first node and the node that communicates with the first node are the secondary nodes in the communication domain. The first node and the node that communicates with the first node respectively belong to two different node sets, namely, the first node set and the second node set. The any node in the first node set may directly communicate with the any node in the second node set. In the existing solution, direct communication cannot be implemented between the secondary nodes in the communication domain. However, in this implementation, direct communication between the secondary nodes can be implemented, and transmission of a plurality of messages between one or more nodes in the first node set and one or more nodes in the second node set can be implemented in one transmission opportunity. In this implementation, a communication channel between the nodes is extended, and communication efficiency between the nodes is also improved.

Case 3: Both the first node and the node that communicates with the first node are secondary nodes in the communication domain. The first node and the node that communicates with the first node both belong to a node set, namely, the first node set. Any two nodes in the first node set may communicate with each other. In the existing solution, direct communication cannot be implemented between the secondary nodes in the communication domain. However, in this implementation, direct communication between the any two secondary nodes can be implemented, and transmission of a plurality of messages between a plurality of any secondary nodes in the first node set can be implemented in one transmission opportunity. In this implementation, a communication channel between the nodes is extended, and communication efficiency between the nodes is also improved.

In a possible implementation, the first transmission opportunity further includes L third time domain resources, and L is an integer greater than 0. If the first node is a primary node, the third time domain resource is used by a node in the first node set to send or receive a message. Alternatively, if the first node is a node included in the second node set, the third time domain resource is used by a node in the first node set or a node other than the first node in the second node set to send or receive a message. Alternatively, if the first node is a node in the first node set, the third time domain resource is used by a node other than the first node in the first node set to send or receive a message.

In the foregoing implementation, in addition to time domain resources for sending and receiving by the first node and the node that communicates with the first node, the first transmission opportunity can further include a resource for sending and/or receiving a message by another node other than the first node. Therefore, message transmission between the plurality of nodes, for example, more than three nodes, can be implemented in the first transmission opportunity. This improves communication efficiency.

In a possible implementation, the first node further performs communication in a second transmission opportunity. A time domain resource in the second transmission opportunity is for message transmission on a second frequency hopping channel. A resource pattern in the second transmission opportunity is the same as a resource pattern in the first transmission opportunity. In this implementation, resource patterns in any two transmission opportunities used by the first node to transmit a message can be configured to be the same. In this way, a simple method can be provided for subsequently identifying whether data is newly transmitted or designing feedback information sending, to reduce additional resource consumption.

In a possible implementation, a message sent or received by the first node includes a first identifier. The first identifier indicates that data carried in the message in which the first identifier is located is new data or is the same as data sent or received on a resource corresponding to a predefined rule. In this implementation, an identifier is set in a transmitted message to identify whether data in the message is new data or retransmitted data. This is simple in implementation, and easy in identification, thereby saving processing resources.

In a possible implementation, the second transmission opportunity is used by the first node to transmit a message before the first node transmits a message in the first transmission opportunity. When a first identifier included in a message sent on a time domain resource in the first transmission opportunity is the same as a first identifier included in a message sent on a time domain resource, in the second transmission opportunity, at a same time domain position as the time domain resource in the first transmission opportunity, data carried in the message sent on the time domain resource at the same time domain position in the first transmission opportunity is retransmitted data. When a first identifier included in a message sent on a time domain resource in the first transmission opportunity is different from a first identifier included in a message sent on a time domain resource, in the second transmission opportunity, at a same time domain position as the time domain resource in the first transmission opportunity, data carried in the message sent on the time domain resource at the same time domain position in the first transmission opportunity is new data.

In the foregoing implementation, based on the fact that the resource patterns in the foregoing two transmission opportunities are the same, whether first identifiers in messages transmitted on two time domain resources that are in a same time domain position and that are in the two transmission opportunities are the same may be determined through comparison, to determine whether data in the messages transmitted on the two time domain resources is the same. If the identifiers are the same, the data is the same. In this case, post-transmitted data is retransmitted data. If the identifiers are different, the data is different. In this case, post-transmitted data is new data. This determining manner is simple and is easy to implement. In addition, when a plurality of nodes perform transmission to one node or a plurality of nodes perform transmission to a plurality of nodes, a plurality of times of transmission in one transmission opportunity are independent of each other. The first identifier does not need to distinguish a plurality of times of transmission in one transmission opportunity. Therefore, a length of the identifier may be designed to be quite short. This can save transmission resources, and a configuration of the resource pattern in the transmission opportunity is not limited to the length of the identifier. Consequently, more message transmission resources can be configured in one transmission opportunity.

In a possible implementation, the node that communicates with the first node in the first transmission opportunity includes the at least one node in the first node set. The first node is a primary node, and the primary node is configured to manage a transmission resource for inter-node communication. Alternatively, the first node is a node included in the second node set, and the any node in the second node set is different from the any node in the first node set. The second transmission opportunity is used by the first node to transmit the message before the first node transmits the message in the first transmission opportunity. A message sent by the first node in the first transmission opportunity includes feedback information. The feedback information is feedback information for a message received by the first node in the second transmission opportunity.

Optionally, when the first node is a node included in the second node set, in the first transmission opportunity and the second transmission opportunity, a node in the second node set sends a message before a node in the first node set sends a message.

In the foregoing implementation, when transmitting the message, the first node carries, in the message, feedback information for all messages received in a previous transmission opportunity. This can reduce a quantity of times of transmitting the feedback information, and save transmission resources.

In a possible implementation, the node that communicates with the first node in the first transmission opportunity includes the at least one node in the first node set. The first node is a node in the first node set. The second transmission opportunity is used by the first node to transmit the message before the first node transmits the message in the first transmission opportunity. A second message is a message sent by the first node on an m^{th} time domain resource in the first transmission opportunity. The second message includes feedback information for a message received by the first node on a time domain resource after an m^{th} time domain resource in the second transmission opportunity, and/or feedback information for a message received by the first node on a time domain resource before the m^{th} time domain resource in the first transmission opportunity, and m is an integer greater than 0.

In the foregoing implementation, when transmitting the message, the first node carries, in the message, feedback information for some messages received in a previous transmission opportunity and the feedback information for the message received in the current transmission opportunity. This can reduce a quantity of times of transmitting the feedback information, and save transmission resources.

In a possible implementation, the node that communicates with the first node in the first transmission opportunity includes the at least one node in the first node set. The first node is a node included in the second node set, and the any node in the second node set is different from the any node in the first node set. Alternatively, the first node is a node in the first node set. Before the first node sends the message on the at least one of the M first time domain resources, the method further includes: The first node receives a third message from a primary node. The third message indicates the first node to send a message in the first transmission opportunity, and the primary node is configured to manage a transmission resource for inter-node communication.

In the foregoing implementation, in one transmission opportunity, if the first node is the secondary node in the communication domain, before starting to transmit a message to another node, the first node can receive a control message, namely, the third message, sent by the primary node. The first node can start to send the message in the first transmission opportunity by using the message, that is, the third message can play a role of aligning a time point for the secondary node.

In a possible implementation, the communication method further includes: The first node receives configuration signaling. The configuration signaling indicates a time-frequency resource for sending and/or receiving a message by the first node in the first transmission opportunity, and/or indicates an identifier and/or a type of a link for sending the message by the first node in the first transmission opportunity. In this implementation, the first node is the secondary node, and can receive the configuration signaling from the primary node, to determine information, for example, a resource for transmitting a message.

In a possible implementation, the node that communicates with the first node in the first transmission opportunity includes the at least one node in the first node set, the first node is a primary node, and the primary node is configured to manage a transmission resource for inter-node communication. The communication method further includes: The first node sends configuration signaling to the at least one node in the first node set. The configuration signaling indicates a time-frequency resource for sending and/or receiving a message by the at least one node in the first node set in the first transmission opportunity, and/or indicates an identifier and/or a type of a transmission link for sending the message by the at least one node in the first node set in the first transmission opportunity. In this implementation, the first node is a primary node, and can send the configuration signaling to the secondary node. Consequently, a node that receives the configuration signaling determines information, for example, a resource for transmitting a message. In a possible implementation, each message sent and/or received by the first node in the first transmission opportunity includes identification information of a transmission link for the message. In this implementation, the identifier of the transmission link is carried in the message, so that a node that receives the message can identify whether the message is a message that needs to be received by the node, to determine a purpose of transmitting the message, so as to filter interference caused by transmission of another message.

In a possible implementation, each message sent and/or received by the first node in the first transmission opportunity successively includes a sequence part, a control information part, and a data part. The sequence part includes at least one preset sequence and/or a preset signal. The control information part includes one or more of an identifier of data, a length of the data part, a modulation and/or coding scheme of the data, and feedback information for the message. The data part includes the data or the data is empty. In this implementation, a composition structure of a message transmitted in a transmission opportunity is provided.

According to a second aspect, an embodiment of this application provides a communication method. The method includes: A first node receives a message on at least one of M first time domain resources. The first node sends a message on at least one of N second time domain resources. The first time domain resource is used by the first node to receive a message. The second time domain resource is used by the first node to send a message. The M first time domain resources and the N second time domain resources belong to a first transmission opportunity. A time domain resource in the first transmission opportunity is for message transmission on a first frequency hopping channel. One time domain resource is for transmitting one message. M is an integer greater than 0, N is an integer greater than 0, and M+N>2.

Optionally, the first transmission opportunity successively includes the M first time domain resources and the N second time domain resources.

The communication method provided in this application can be applied to a communication domain. The communication domain includes one primary node and at least one secondary node. A node is a communication apparatus. In an existing solution, the primary node can send only one message to one secondary node each time. After receiving the message from the primary node, the secondary node can also send only one message to the primary node. If a plurality of messages need to be sent through interaction or interaction between a plurality of nodes is required, the primary node and the secondary node need to frequently switch a receiving and sending relationship, resulting in large overheads of a resource, for example, a time-frequency resource. However, in this application, a node can send a plurality of messages to one or more nodes in one transmission opportunity. Alternatively, a node can simultaneously send messages to a plurality of nodes. This reduces a quantity of times of receiving and sending switching, reduces overheads of the resource, for example, the time-frequency resource, and improves communication efficiency. In a possible implementation, the first transmission opportunity further includes K first time domain resources, and K is an integer greater than 0. After the first node sends a message on at least one of N second time domain resources, the method further includes: The first node receives a message on at least one of the K first time domain resources.

In the foregoing implementation, the first node can first receive one or more messages from another node in the first transmission opportunity, then send one or more messages to another node in the first transmission opportunity, and next, receive one or more messages from another node in the first transmission opportunity. In other words, a plurality of messages can be exchanged between a plurality of nodes in one transmission opportunity. Compared with that in the conventional technology, this can greatly reduce resource consumption and improve communication efficiency.

In a possible implementation, M is greater than 1, and the M first time domain resources are consecutive time domain resources in the first transmission opportunity. That a first node receives a message on at least one of M first time domain resources includes: The first node receives messages on a plurality of first time domain resources.

In the foregoing implementation, one node can continuously receive a plurality of messages from another node in one transmission opportunity, to reduce switching of a receiving and sending relationship, and improve communication efficiency.

In a possible implementation, N is greater than 1, and the N second time domain resources are consecutive time domain resources in the first transmission opportunity. That the first node sends a message on at least one of N second time domain resources includes: The first node sends messages on a plurality of second time domain resources.

In the foregoing implementation, one node can continuously send a plurality of messages to another node in one transmission opportunity, to reduce switching of a receiving and sending relationship, and improve communication efficiency.

In a possible implementation, a node that communicates with the first node in the first transmission opportunity is a primary node, and the primary node is configured to manage a transmission resource for inter-node communication.

Alternatively, a node that communicates with the first node in the first transmission opportunity includes at least one node in a first node set. The first node is a node included in a second node set. Any node in the second node set is different from any node in the first node set.

Alternatively, a node that communicates with the first node in the first transmission opportunity includes at least one node in a first node set, and the first node is a node in the first node set. The first node set and the second node set are node sets in the communication domain, and each node set includes one or more nodes in the communication domain. In the foregoing implementation, three cases of the first node are provided.

Case 1: The node that communicates with the first node in the first transmission opportunity is a primary node. In this case, the primary node may send a plurality of messages to the first node in the first transmission opportunity, and the first node may also send a plurality of messages to the primary node in the first transmission opportunity. Compared with that in the conventional technology, this can save resources, and improve communication efficiency.

Case 2: Both the first node and the node that communicates with the first node are the secondary nodes in the communication domain. The first node and the node that communicates with the first node respectively belong to two different node sets, namely, the second node set and the first node set. The any node in the first node set may directly communicate with the any node in the second node set. In the existing solution, direct communication cannot be implemented between the secondary nodes in the communication domain. However, in this implementation, direct communication between the secondary nodes can be implemented, and transmission of a plurality of messages between one or more nodes in the first node set and one or more nodes in the second node set can be implemented in one transmission opportunity. In this implementation, a communication channel between the nodes is extended, and communication efficiency between the nodes is also improved.

Case 3: Both the first node and the node that communicates with the first node are secondary nodes in the communication domain. The first node and the node that communicates with the first node both belong to a node set, namely, the first node set. Any two nodes in the first node set may communicate with each other. In the existing solution, direct communication cannot be implemented between the secondary nodes in the communication domain. However, in this implementation, direct communication between the any two secondary nodes can be implemented, and transmission of a plurality of messages between a plurality of any secondary nodes in the first node set can be implemented in one transmission opportunity. In this implementation, a communication channel between the nodes is extended, and communication efficiency between the nodes is also improved.

In a possible implementation, the first transmission opportunity further includes L third time domain resources, and L is an integer greater than 0. If the node that communicates with the first node in the first transmission opportunity is a primary node, the third time domain resource is used by a node other than the first node to send or receive a message. Alternatively, if the first node is a node included in the second node set, the third time domain resource is used by a node in the first node set or a node other than the first node in the second node set to send or receive a message. Alternatively, if the first node is a node in the first node set, the third time domain resource is used by a node other than the first node in the first node set to send or receive a message.

In the foregoing implementation, in addition to time domain resources for sending and receiving by the first node and the node that communicates with the first node, the first transmission opportunity can further include a resource for sending and/or receiving a message by another node other than the first node. Therefore, message transmission between the plurality of nodes, for example, more than three nodes, can be implemented in the first transmission opportunity. This improves communication efficiency.

In a possible implementation, the first node further transmits a message in a second transmission opportunity. A time domain resource in the second transmission opportunity is for message transmission on a second frequency hopping channel. A resource pattern in the second transmission opportunity is the same as a resource pattern in the first transmission opportunity. In this implementation, resource patterns in any two transmission opportunities used by the first node to transmit a message can be configured to be the same. In this way, a simple method can be provided for subsequently identifying whether data is newly transmitted or designing feedback information sending, to reduce additional resource consumption.

In a possible implementation, a message sent or received by the first node includes a first identifier. The first identifier indicates that data carried in the message in which the first identifier is located is new data or is the same as data sent or received on a resource corresponding to a predefined rule. In this implementation, an identifier is set in a transmitted message to identify whether data in the message is new data or retransmitted data. This is simple in implementation, and easy in identification, thereby saving processing resources.

In a possible implementation, the second transmission opportunity is used by the first node to transmit a message before the first node transmits a message in the first transmission opportunity. When a first identifier included in a message sent on a time domain resource in the first transmission opportunity is the same as a first identifier included in a message sent on a time domain resource, in the second transmission opportunity, at a same time domain position as the time domain resource in the first transmission opportunity, data carried in the message sent on the time domain resource at the same time domain position in the first transmission opportunity is retransmitted data. When a first identifier included in a message sent on a time domain resource in the first transmission opportunity is different from a first identifier included in a message sent on a time domain resource, in the second transmission opportunity, at a same time domain position as the time domain resource in the first transmission opportunity, data carried in the message sent on the time domain resource at the same time domain position in the first transmission opportunity is new data.

In the foregoing implementation, based on the fact that the resource patterns in the foregoing two transmission opportunities are the same, whether first identifiers in messages transmitted on two time domain resources that are in a same time domain position and that are in the two transmission opportunities are the same may be determined through comparison, to determine whether data in the messages transmitted on the two time domain resources is the same. If the identifiers are the same, the data is the same. In this case, post-transmitted data is retransmitted data. If the identifiers are different, the data is different. In this case, post-transmitted data is new data. This determining manner is simple and is easy to implement. In addition, when a plurality of nodes perform transmission to one node or a plurality of nodes perform transmission to a plurality of nodes, a plurality of times of transmission in one transmission opportunity are independent of each other. The first identifier does not need to distinguish a plurality of times of transmission in one transmission opportunity. Therefore, a length of the identifier may be designed to be quite short. This can save transmission resources, and a configuration of the resource pattern in the transmission opportunity is not limited to the length of the identifier. Consequently, more message transmission resources can be configured in one transmission opportunity.

In a possible implementation, the node that communicates with the first node in the first transmission opportunity is a primary node, and the primary node is configured to manage a transmission resource for inter-node communication. Alternatively, the node that communicates with the first node in the first transmission opportunity includes the at least one node in the first node set. The first node is a node included in the second node set. The any node in the second node set is different from the any node in the first node set. A message sent by the first node in the first transmission opportunity includes feedback information. The feedback information is feedback information for a message received by the first node in the first transmission opportunity. Optionally, the node that communicates with the first node in the first transmission opportunity includes the at least one node in the first node set. The first node is a node included in the second node set. The any node in the second node set is different from the any node in the first node set. In the first transmission opportunity and the second transmission opportunity, the node in the first node set sends a message before the node in the second node set.

In the foregoing implementation, when transmitting the message, the first node carries, in the message, feedback information for all messages received in a previous transmission opportunity. This can reduce a quantity of times of transmitting the feedback information, and save transmission resources.

In a possible implementation, the node that communicates with the first node in the first transmission opportunity includes the at least one node in the first node set. The first node is a node in the first node set. The second transmission opportunity is used by the first node to transmit the message before the first node transmits the message in the first transmission opportunity. A second message is a message received by the first node on an m^{th} time domain resource in the first transmission opportunity, and m is an integer greater than 0. The second message includes feedback information for a message received by the first node on a time domain resource after an m^{th} time domain resource in the second transmission opportunity, and/or feedback information for a message received by the first node on a time domain resource before the m^{th} time domain resource in the first transmission opportunity.

In the foregoing implementation, when transmitting the message, the first node carries, in the message, feedback information for some messages received in a previous transmission opportunity and the feedback information for the message received in the current transmission opportunity. This can reduce a quantity of times of transmitting the feedback information, and save transmission resources.

In a possible implementation, the node that communicates with the first node in the first transmission opportunity includes the at least one node in the first node set. The first node is a node included in the second node set, and the any node in the second node set is different from the any node in the first node set. Alternatively, the first node is a node in the first node set. Before the first node receives the message on the at least one of the M first time domain resources, the method further includes: The first node receives a third message from a primary node. The third message indicates the first node to send a message in the first transmission opportunity, and the primary node is configured to manage a transmission resource for inter-node communication.

In the foregoing implementation, in one transmission opportunity, if the first node is the secondary node in the communication domain, before starting to transmit a message to another node, the first node can receive a control message, namely, the third message, sent by the primary node. The first node can start to send the message in the first transmission opportunity by using the message, that is, the third message can play a role of aligning a time point for the secondary node.

In a possible implementation, the method further includes: The first node receives configuration signaling. The configuration signaling indicates a time-frequency resource for sending and/or receiving a message by the first node in the first transmission opportunity, and/or indicates an identifier and/or a type of a transmission link for sending the message by the first node in the first transmission opportunity. In this implementation, the first node is the secondary node, and can receive the configuration signaling from the primary node, to determine information, for example, a resource for transmitting a message.

In a possible implementation, each message sent and/or received by the first node in the first transmission opportunity includes identification information of a transmission link for the message. In this implementation, the identifier of the transmission link is carried in the message, so that a node that receives the message can identify whether the message is a message that needs to be received by the node, to determine a purpose of transmitting the message, so as to filter interference caused by transmission of another message.

In a possible implementation, each message sent and/or received by the first node in the first transmission opportunity successively includes a sequence part, a control information part, and a data part. The sequence part includes at least one preset sequence and/or a preset signal. The control information part includes one or more of an identifier of data, a length of the data part, a modulation and/or coding scheme of the data, and feedback information for the message. The data part includes the data or the data is empty. In this implementation, a composition structure of a message transmitted in a transmission opportunity is provided.

According to a third aspect, an embodiment of this application provides a communication apparatus. The apparatus includes:
a sending unit, configured to send a message on at least one of M first time domain resources; and
a receiving unit, configured to receive a message on at least one of N second time domain resources.

The first time domain resource is used by the first node to send a message.

The second time domain resource is used by the first node to receive a message.

The M first time domain resources and the N second time domain resources belong to a first transmission opportunity. A time domain resource in the first transmission opportunity is for message transmission on a first frequency hopping channel. M is an integer greater than 0, N is an integer greater than 0, and M+N>2.

In a possible implementation, the first transmission opportunity successively includes the M first time domain resources and the N second time domain resources.

In a possible implementation, the first transmission opportunity further includes K second time domain resources, and K is an integer greater than 0.

The receiving unit is further configured to: before the sending unit sends the message on the at least one of the M first time domain resources, receive a message on at least one of the K second time domain resources.

In a possible implementation, M is greater than 1, and the M first time domain resources are consecutive time domain resources in the first transmission opportunity. The sending unit is specifically configured to:
send messages on a plurality of first time domain resources.

In a possible implementation, N is greater than 1, and the N second time domain resources are consecutive time domain resources in the first transmission opportunity. The receiving unit is specifically configured to:
receive messages on a plurality of second time domain resources.

In a possible implementation, a node that communicates with the first node in the first transmission opportunity includes at least one node in a first node set.

The first node is a primary node, and the primary node is configured to manage a transmission resource for inter-node communication.

Alternatively, the first node is a node included in a second node set, and any node in the second node set is different from any node in the first node set.

Alternatively, the first node is a node in the first node set.

In a possible implementation, the first transmission opportunity further includes L third time domain resources, and L is an integer greater than 0.

If the first node is a primary node, the third time domain resource is used by a node in the first node set to send or receive a message.

Alternatively, if the first node is a node included in the second node set, the third time domain resource is used by a node in the first node set or a node other than the first node in the second node set to send or receive a message.

Alternatively, if the first node is a node in the first node set, the third time domain resource is used by a node other than the first node in the first node set to send or receive a message.

In a possible implementation, the first node further performs communication in a second transmission opportunity. A time domain resource in the second transmission opportunity is for message transmission on a second frequency hopping channel.

A resource pattern in the second transmission opportunity is the same as a resource pattern in the first transmission opportunity.

In a possible implementation, a message sent or received by the first node includes a first identifier. The first identifier indicates that data carried in the message in which the first identifier is located is new data or is the same as data sent or received on a resource corresponding to a predefined rule. In a possible implementation, the second transmission opportunity is used by the first node to transmit a message before the first node transmits a message in the first transmission opportunity. When a first identifier included in a message sent on a time domain resource in the first transmission opportunity is the same as a first identifier included in a message sent on a time domain resource, in the second transmission opportunity, at a same time domain position as the time domain resource in the first transmission opportunity, data carried in the message sent on the time domain resource at the same time domain position in the first transmission opportunity is retransmitted data.

When a first identifier included in a message sent on a time domain resource in the first transmission opportunity is different from a first identifier included in a message sent on a time domain resource, in the second transmission opportunity, at a same time domain position as the time domain resource in the first transmission opportunity, data carried in the message sent on the time domain resource at the same time domain position in the first transmission opportunity is new data.

In a possible implementation, the node that communicates with the first node in the first transmission opportunity includes the at least one node in the first node set. The first node is a primary node, and the primary node is configured to manage a transmission resource for inter-node communication. Alternatively, the first node is a node included in the second node set, and the any node in the second node set is different from the any node in the first node set.

The second transmission opportunity is used by the first node to transmit the message before the first node transmits the message in the first transmission opportunity.

A message sent by the first node in the first transmission opportunity includes feedback information. The feedback information is feedback information for a message received by the first node in the second transmission opportunity.

In a possible implementation, the first node is a node included in a second node set.

In the first transmission opportunity and the second transmission opportunity, a node in the second node set sends a message before a node in the first node set sends a message.

In a possible implementation, the node that communicates with the first node in the first transmission opportunity includes the at least one node in the first node set. The first node is a node in the first node set. The second transmission opportunity is used by the first node to transmit the message before the first node transmits the message in the first transmission opportunity.

A second message is a message sent by the first node on an m^{th} time domain resource in the first transmission opportunity. The second message includes feedback information for a message received by the first node on a time domain resource after an m^{th} time domain resource in the second transmission opportunity, and/or feedback information for a message received by the first node on a time domain resource before the m^{th} time domain resource in the first transmission opportunity, and m is an integer greater than 0.

In a possible implementation, the node that communicates with the first node in the first transmission opportunity includes the at least one node in the first node set. The first node is a node included in the second node set, and the any node in the second node set is different from the any node in the first node set. Alternatively, the first node is a node in the first node set.

The receiving unit is further configured to: before the sending unit sends the message on the at least one of the M first time domain resources, receive a third message from a primary node. The third message indicates the first node to send a message in the first transmission opportunity, and the primary node is configured to manage a transmission resource for inter-node communication. In a possible implementation, the receiving unit is further configured to:
receive configuration signaling, where the configuration signaling indicates a time-frequency resource for sending and/or receiving a message by the first node in the first transmission opportunity, and/or indicates an identifier and/or a type of a transmission link for sending the message by the first node in the first transmission opportunity.

In a possible implementation, the node that communicates with the first node in the first transmission opportunity includes the at least one node in the first node set, the first node is a primary node, and the primary node is configured to manage a transmission resource for inter-node communication.

The sending unit is further configured to send configuration signaling to the at least one node in the first node set.

The configuration signaling indicates a time-frequency resource for sending and/or receiving a message by the at least one node in the first node set in the first transmission opportunity, and/or indicates an identifier and/or a type of a transmission link for sending the message by the at least one node in the first node set in the first transmission opportunity.

In a possible implementation, each message sent and/or received by the first node in the first transmission opportunity includes identification information of a transmission link for the message. In a possible implementation, each message sent and/or received by the first node in the first transmission opportunity successively includes a sequence part, a control information part, and a data part. The sequence part includes at least one preset sequence and/or a preset signal. The control information part includes one or more of an identifier of data, a length of the data part, a modulation and/or coding scheme of the data, and feedback information for the message. The data part includes the data or the data is empty.

According to a fourth aspect, an embodiment of this application provides a communication apparatus. The apparatus includes:
a receiving unit, configured to receive a message on at least one of M first time domain resources; and
a sending unit, configured to send a message on at least one of N second time domain resources.

The first time domain resource is used by the first node to receive a message.

The second time domain resource is used by the first node to send a message.

The M first time domain resources and the N second time domain resources belong to a first transmission opportunity. A time domain resource in the first transmission opportunity is for message transmission on a first frequency hopping channel. One time domain resource is for transmitting one message. M is an integer greater than 0, N is an integer greater than 0, and M+N>2. In a possible implementation, the first transmission opportunity successively includes the M first time domain resources and the N second time domain resources.

In a possible implementation, the first transmission opportunity further includes K first time domain resources, and K is an integer greater than 0.

The receiving unit is further configured to: after the sending unit sends the message on the at least one of the N second time domain resources, receive, by the first node, a message on at least one of the K first time domain resources.

In a possible implementation, M is greater than 1, and the M first time domain resources are consecutive time domain resources in the first transmission opportunity. The receiving unit is specifically configured to:
receive messages on a plurality of first time domain resources.

In a possible implementation, N is greater than 1, and the N second time domain resources are consecutive time domain resources in the first transmission opportunity. The sending unit is specifically configured to:
send messages on a plurality of second time domain resources.

In a possible implementation, a node that communicates with the first node in the first transmission opportunity is a primary node, and the primary node is configured to manage a transmission resource for inter-node communication.

Alternatively, a node that communicates with the first node in the first transmission opportunity includes at least one node in a first node set. The first node is a node included in a second node set. Any node in the second node set is different from any node in the first node set.

Alternatively, a node that communicates with the first node in the first transmission opportunity includes at least one node in a first node set, and the first node is a node in the first node set.

In a possible implementation, the first transmission opportunity further includes L third time domain resources, and L is an integer greater than 0.

If the node that communicates with the first node in the first transmission opportunity is a primary node, the third time domain resource is used by a node other than the first node to send or receive a message.

Alternatively, if the first node is a node included in the second node set, the third time domain resource is used by a node in the first node set or a node other than the first node in the second node set to send or receive a message.

Alternatively, if the first node is a node in the first node set, the third time domain resource is used by a node other than the first node in the first node set to send or receive a message.

In a possible implementation, the first node further transmits a message in a second transmission opportunity. A time domain resource in the second transmission opportunity is for message transmission on a second frequency hopping channel.

A resource pattern in the second transmission opportunity is the same as a resource pattern in the first transmission opportunity.

In a possible implementation, a message sent or received by the first node includes a first identifier. The first identifier indicates that data carried in the message in which the first identifier is located is new data or is the same as data sent or received on a resource corresponding to a predefined rule. In a possible implementation, the second transmission opportunity is used by the first node to transmit a message before the first node transmits a message in the first transmission opportunity. When a first identifier included in a message sent on a time domain resource in the first transmission opportunity is the same as a first identifier included in a message sent on a time domain resource, in the second transmission opportunity, at a same time domain position as the time domain resource in the first transmission opportunity, data carried in the message sent on the time domain resource at the same time domain position in the first transmission opportunity is retransmitted data.

When a first identifier included in a message sent on a time domain resource in the first transmission opportunity is different from a first identifier included in a message sent on a time domain resource, in the second transmission opportunity, at a same time domain position as the time domain resource in the first transmission opportunity, data carried in the message sent on the time domain resource at the same time domain position in the first transmission opportunity is new data.

In a possible implementation, the node that communicates with the first node in the first transmission opportunity is a primary node, and the primary node is configured to manage a transmission resource for inter-node communication. Alternatively, the node that communicates with the first node in the first transmission opportunity includes the at least one node in the first node set. The first node is a node included in the second node set. The any node in the second node set is different from the any node in the first node set.

A message sent by the first node in the first transmission opportunity includes feedback information. The feedback information is feedback information for a message received by the first node in the first transmission opportunity.

In a possible implementation, the node that communicates with the first node in the first transmission opportunity includes the at least one node in the first node set. The first node is a node included in the second node set. The any node in the second node set is different from the any node in the first node set.

In the first transmission opportunity and the second transmission opportunity, the node in the first node set sends a message before the node in the second node set.

In a possible implementation, the node that communicates with the first node in the first transmission opportunity includes the at least one node in the first node set. The first node is a node in the first node set. The second transmission opportunity is used by the first node to transmit the message before the first node transmits the message in the first transmission opportunity.

A second message is a message received by the first node on an m^{th} time domain resource in the first transmission opportunity, and m is an integer greater than 0. The second message includes feedback information for a message received by the first node on a time domain resource after an m^{th} time domain resource in the second transmission opportunity, and/or feedback information for a message received by the first node on a time domain resource before the m^{th} time domain resource in the first transmission opportunity.

In a possible implementation, the node that communicates with the first node in the first transmission opportunity includes the at least one node in the first node set. The first node is a node included in the second node set, and the any node in the second node set is different from the any node in the first node set. Alternatively, the first node is a node in the first node set.

The receiving unit is further configured to: before the receiving unit receives the message on the at least one of the M first time domain resources, receive a third message from a primary node. The third message indicates the first node to send a message in the first transmission opportunity, and the primary node is configured to manage a transmission resource for inter-node communication.

In a possible implementation, the receiving unit is further configured to:
receive configuration signaling, where the configuration signaling indicates a time-frequency resource for sending and/or receiving a message by the first node in the first transmission opportunity, and/or indicates an identifier and/or a type of a transmission link for sending the message by the first node in the first transmission opportunity.

In a possible implementation, each message sent and/or received by the first node in the first transmission opportunity includes identification information of a transmission link for the message. In a possible implementation, each message sent and/or received by the first node in the first transmission opportunity successively includes a sequence part, a control information part, and a data part. The sequence part includes at least one preset sequence and/or a preset signal. The control information part includes one or more of an identifier of data, a length of the data part, a modulation and/or coding scheme of the data, and feedback information for the message. The data part includes the data or the data is empty.

According to a fifth aspect, an embodiment of this application provides a communication apparatus. The apparatus may include: a memory, a processor coupled to the memory, a sending interface, and a receiving interface. The sending interface is configured to support the communication apparatus in performing a step of sending a message in the communication method provided in the first aspect. The receiving interface is configured to support the communication apparatus in performing a step of receiving a message in the communication method provided in the first aspect. The sending interface and the receiving interface may be integrated as a transceiver. The processor is configured to support the communication apparatus in performing another processing step of the communication apparatus in the communication method provided in the first aspect other than sending the message and receiving the message.

It should be noted that the sending interface and the receiving interface in this embodiment of the present invention may be integrated together, or may be coupled by using a coupler. The memory is configured to store implementation code of the communication method described in the first aspect. The processor is configured to execute the program code stored in the memory. The memory and the processor may be integrated together, or may be coupled by using a coupler.

In addition, in this application, a computer program in the memory may be pre-stored, or may be stored after being downloaded from an internet when the apparatus is used. A source of the computer program in the memory is not specifically limited in this application. The coupling in this embodiment of this application is an indirect coupling or connection between apparatuses, units, or modules for information exchange between the apparatuses, the units, or the modules, and may be in an electrical, a mechanical, or another form.

In a possible implementation, the processor is configured to execute the program instruction stored in the memory, to enable the communication device to perform the following operations:
sending a message on at least one of M first time domain resources through the sending interface; and receiving a message on at least one of N second time domain resources through the receiving interface, where the first time domain resource is used by a first node to send a message; the second time domain resource is used by the first node to receive a message; the M first time domain resources and the N second time domain resources belong to a first transmission opportunity; a time domain resource in the first transmission opportunity is for message transmission on a first frequency hopping channel; and M is an integer greater than 0, N is an integer greater than 0, and M+N>2.

According to a sixth aspect, an embodiment of this application provides a communication apparatus. The apparatus may include: a memory, a processor coupled to the memory, a sending interface, and a receiving interface. The sending interface is configured to support the communication apparatus in performing a step of sending a message in the communication method provided in the second aspect. The receiving interface is configured to support the communication apparatus in performing a step of receiving a message in the communication method provided in the second aspect. The sending interface and the receiving interface may be integrated as a transceiver. The processor is configured to support the communication apparatus in performing another processing step of the communication apparatus in the communication method provided in the second aspect other than sending the message and receiving the message.

It should be noted that the sending interface and the receiving interface in this embodiment of the present invention may be integrated together, or may be coupled by using a coupler. The memory is configured to store implementation code of the communication method described in the second aspect. The processor is configured to execute the program code stored in the memory. The memory and the processor may be integrated together, or may be coupled by using a coupler.

In addition, in this application, a computer program in the memory may be pre-stored, or may be stored after being downloaded from an internet when the apparatus is used. A source of the computer program in the memory is not specifically limited in this application. The coupling in this embodiment of this application is an indirect coupling or connection between apparatuses, units, or modules for information exchange between the apparatuses, the units, or the modules, and may be in an electrical, a mechanical, or another form.

In a possible implementation, the processor is configured to execute the program instruction stored in the memory, to enable the communication device to perform the following operations:
receiving a message on at least one of M first time domain resources through the receiving interface; and sending a message on at least one of N second time domain resources through the sending interface, where the first time domain resource is used by a first node to receive a message; the second time domain resource is used by the first node to send a message; and the M first time domain resources and the N second time domain resources belong to a first transmission opportunity; a time domain resource in the first transmission opportunity is for message transmission on a first frequency hopping channel; one time domain resource is for transmitting one message; and M is an integer greater than 0, N is an integer greater than 0, and M+N>2.

According to a seventh aspect, an embodiment of this application provides a communication system. The communication system includes a first node and a second node. The first node is the apparatus according to any one of the third aspect, and the second node is the apparatus according to any one of the fourth aspect. Alternatively, the first node is the apparatus according to the fifth aspect, and the second node is the apparatus according to the sixth aspect.

According to an eighth aspect, an embodiment of this application provides a computer-readable storage medium. The computer-readable storage medium stores a computer program. The computer program is executed by a processor to implement the method according to any one of the first aspect. Alternatively, the computer program is executed by a processor to implement the method according to any one of the second aspect.

According to a ninth aspect, an embodiment of this application provides a computer program product. When the computer program product runs on a computer, the computer is enabled to perform the method according to any one of the first aspect, or the computer is enabled to perform the method according to any one of the second aspect.

According to a tenth aspect, an embodiment of this application provides a terminal. The terminal includes the apparatus according to any one of the third aspect, or the terminal includes the apparatus according to any one of the fourth aspect. Optionally, the terminal may be a vehicle, or may be a vehicle-mounted device, or the like.

It may be understood that the apparatuses according to the third aspect to the sixth aspect, the system according to the seventh aspect, the computer-readable storage medium according to the eighth aspect, the computer program product according to the ninth aspect, and the terminal according to the tenth aspect are all configured to perform the method according to any one of the first aspect or the second aspect. Therefore, for beneficial effects that can be achieved by the apparatuses, the system, the computer-readable storage medium, and the computer program product, refer to the beneficial effects in corresponding methods. Details are not described herein again.

### BRIEF DESCRIPTION OF DRAWINGS

The following describes the accompanying drawings for embodiments of this application.
FIG. 1(a) to FIG. 3 each are a schematic diagram of a system architecture according to an embodiment of this application;
FIG. 3A is a schematic diagram of a connected isochronous stream connection event;
FIG. 3B and FIG. 3C each are a schematic diagram of a transmission group according to an embodiment of this application;
FIG. 4 is a schematic flowchart of a method according to an embodiment of this application;
FIG. 5 is a schematic diagram of a transmission opportunity according to an embodiment of this application;
FIG. 6 is a schematic diagram of a transmission opportunity according to an embodiment of this application;
FIG. 7 and FIG. 8 each are a schematic diagram of another transmission opportunity according to an embodiment of this application;
FIG. 9 to FIG. 11 are schematic diagrams of comparison between two transmission opportunities according to an embodiment of this application;
FIG. 12 and FIG. 13 each are a schematic diagram of a logical structure of an apparatus according to an embodiment of this application; and
FIG. 14 and FIG. 15 each are a schematic diagram of a hardware structure of an apparatus according to an embodiment of this application.

### DESCRIPTION OF EMBODIMENTS

The following describes embodiments of this application with reference to the accompanying drawings.

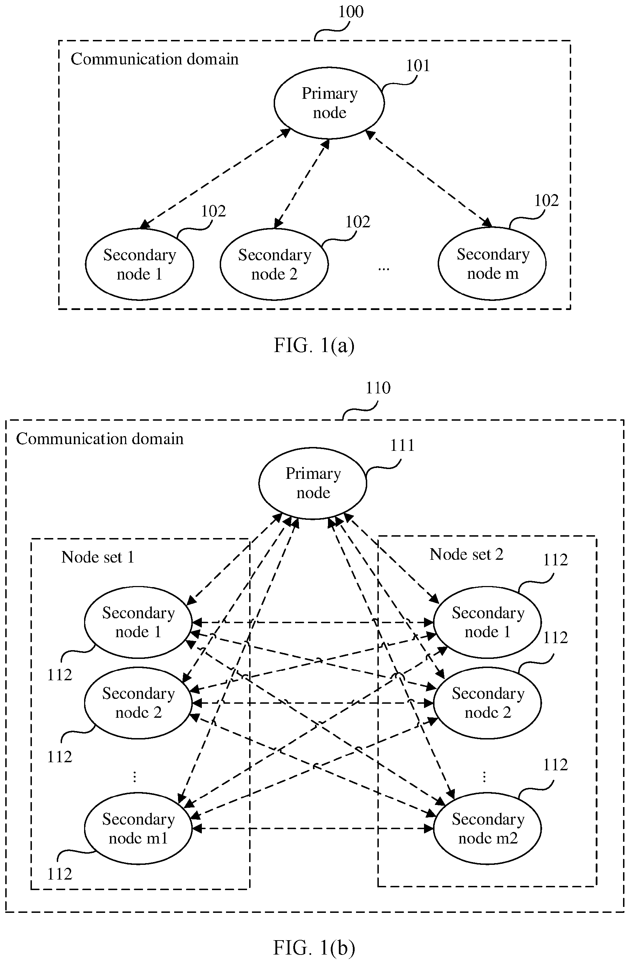

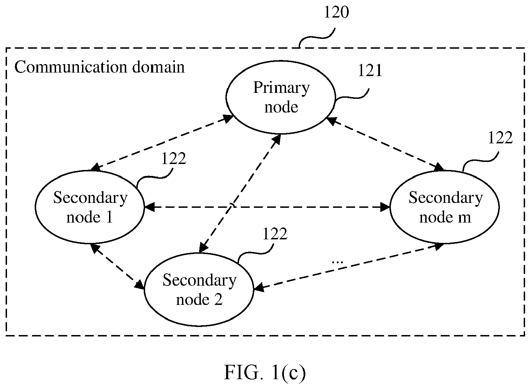

FIG. 1(a) to FIG. 1(c) show examples of schematic diagrams of system architectures in three applicable communication domains according to an embodiment of this application, as shown in FIG. 1(a), FIG. 1(b), and FIG. 1(c).

A communication domain includes a plurality of communication devices. There is a communication connection relationship (namely, a communication link) between the communication devices. In addition, the communication devices may exchange information with each other through the communication link. In a communication scenario, the communication domain includes one primary communication device (which may be referred to as a primary device for short) and at least one secondary communication device (which may be referred to as a secondary device for short). The primary device manages a transmission resource (a resource for short) in the communication domain, and has a function of scheduling the resource for the communication link between the communication devices in the communication domain. The resource may be a time domain resource or a frequency domain resource, or includes a time domain resource and a frequency domain resource. The communication device may also be referred to as a communication node, a node for short. In this case, the primary device may be referred to as a primary node, and the secondary device may be referred to as a secondary node.

FIG. 1(a) is a schematic diagram of a system architecture in a communication domain 100. The communication domain 100 includes one primary node 101 and m secondary nodes 102, where m is an integer greater than 0. Each secondary node 102 may communicate with the primary node 101, but the secondary nodes 102 do not communicate with each other.

FIG. 1(b) is a schematic diagram of a system architecture in a communication domain 110. The communication domain 110 includes one primary node 111 and a plurality of node sets (two node sets, namely, a node set 1 and a node set 2, are used as an example in FIG. 1(b)). Each node set of the plurality of node sets includes one or more secondary nodes 112. For example, the node set 1 includes m1 secondary nodes 112, and the node set 2 includes m2 secondary nodes, where both m1 and m2 are integers greater than 0. Each secondary node 112 in the plurality of node sets may communicate with the primary node 111. The secondary nodes 112 in each node set may or may not communicate with each other, but each secondary node 112 in each node set may communicate with the secondary node 112 in one or more other node sets. For example, the m1 secondary nodes 112 in the node set 1 may communicate with each secondary node 112 in the node set 2.

FIG. 1(c) is a schematic diagram of a system architecture in a communication domain 120. The communication domain 120 includes one primary node 121 and m secondary nodes 122. Any two of the primary node 121 and the m secondary nodes 122 may communicate with each other.

The system architectures shown in FIG. 1(a), FIG. 1(b), and FIG. 1(c) are merely examples, and constitute no limitation on embodiments of this application.

In a system in a communication domain to which embodiments of this application are applicable, nodes may perform wireless communication with each other, for example, may perform communication by using a wireless communication technology, for example, Wi-Fi, Bluetooth, or ZigBee. This application can be further applied to another short-range communication technology. This is not limited herein.

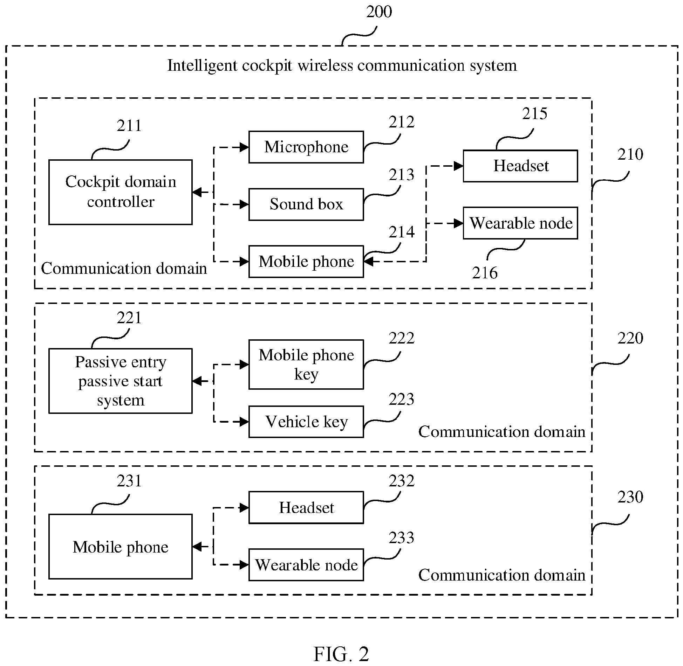

For ease of understanding, a communication domain in an intelligent cockpit wireless communication system is used as an example for description with reference to FIG. 2. FIG. 2 is a schematic diagram of an architecture of an intelligent cockpit wireless communication system 200. The intelligent cockpit wireless communication system 200 may include a communication domain 210, a communication domain 220, and a communication domain 230.

The communication domain 210 includes a primary node, namely, a cockpit domain controller (cockpit domain controller, CDC) 211, and includes secondary nodes, namely, a microphone 212, a sound box 213, and a mobile phone 214. The primary node, namely, the CDC 211, may perform wireless communication with the secondary nodes, namely, the microphone 212, the sound box 213, and the mobile phone 214. In addition, in the communication domain 210, the mobile phone 214, a headset 215, and a wearable node 216 may be located in one communication subdomain. In the communication subdomain, the mobile phone 214 is a primary node, and the headset 215 and the wearable node 216 are secondary nodes. The primary node, namely, the mobile phone 214, may perform wireless communication with the secondary nodes, namely, the headset 215 and the wearable node 216.

The communication domain 220 includes a primary node, namely, a system passive entry passive start (passive entry passive start, PEPS) system 221, and includes secondary nodes, namely, a mobile phone key 222 and a vehicle key 223. The primary node, namely, the PEPS 221, may perform wireless communication with the secondary nodes, namely, the mobile phone key 222 and the vehicle key 223.

The communication domain 230 includes a primary node, namely, a mobile phone 231, and includes secondary nodes, namely, a headset 232 and a wearable node 233. The primary node, namely, the mobile phone 231, may perform wireless communication with the secondary nodes, namely, the headset 232 and the wearable node 233.

Communication connection relationships between the primary nodes and the secondary nodes in the communication domain 210, the communication domain 220, and the communication domain 230 may also be the connection relationships in the communication domains shown in FIG. 1(b) and FIG. 1(c). For details, refer to the foregoing descriptions. Details are not described herein again.

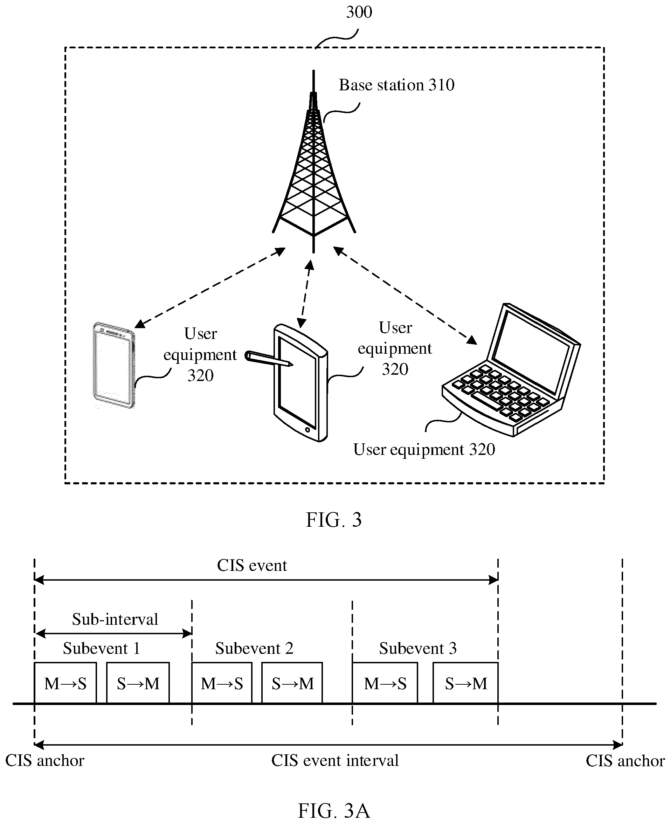

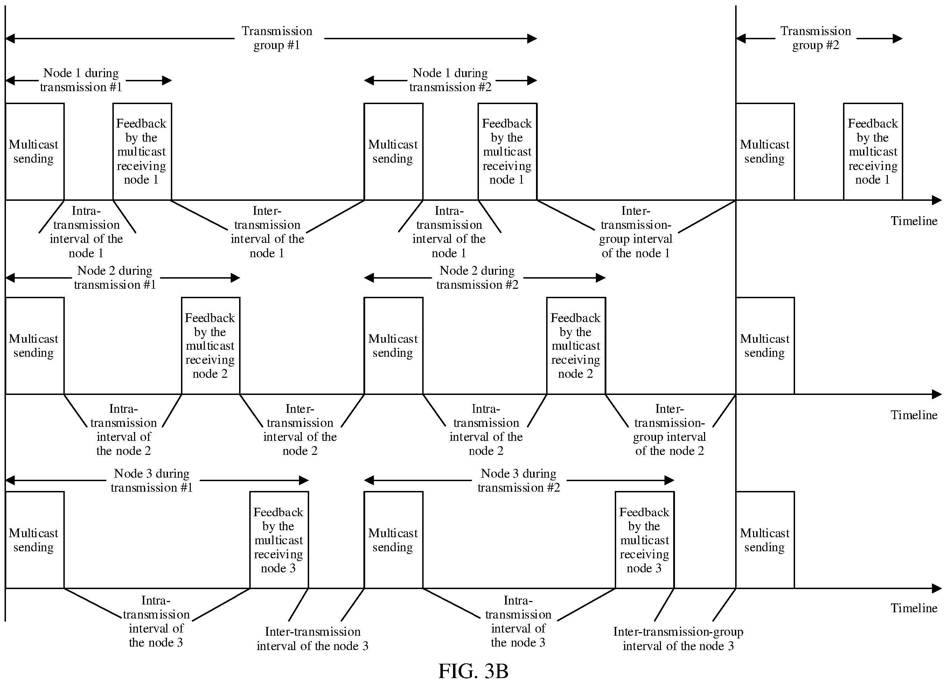

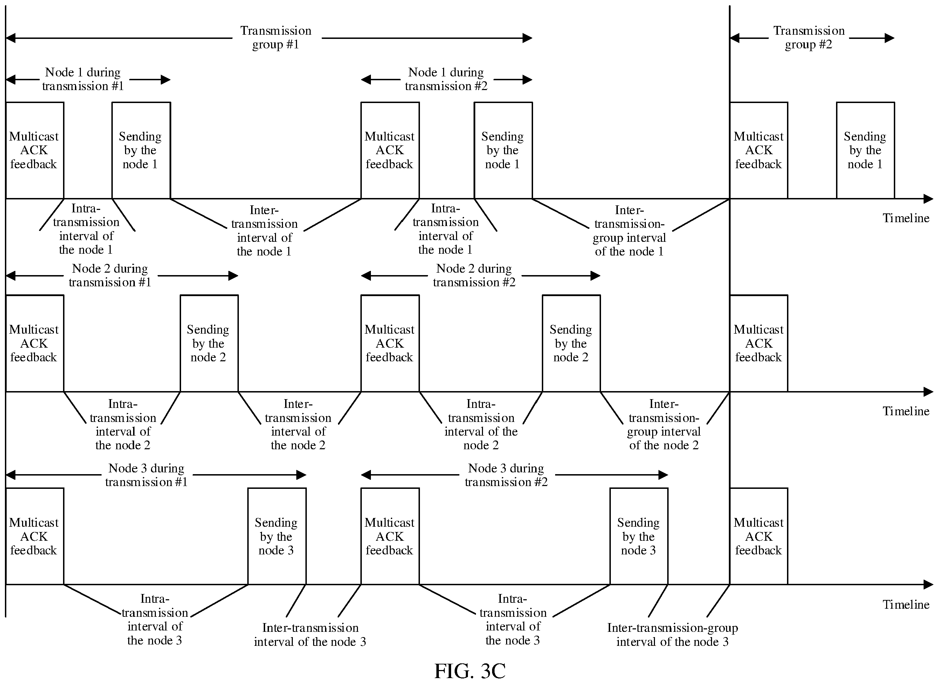

A communication domain in wide area wireless communication is further used as an example for description with reference to FIG. 3. FIG. 3 is a schematic diagram of an architecture of a communication domain 300 in wide area wireless communication. The communication domain 300 may include a base station 310 and a plurality of pieces of user equipment (user equipment, UE) 320. The user equipment 320 may be a node, for example, a smartphone, a tablet computer, a personal computer, a handheld computer, a wearable electronic node, or a smart internet of things household electrical appliance. In the communication domain 300, the base station 310 is a primary node, and the user equipment 320 is a secondary node. The secondary node, namely, the user equipment 320, may perform wireless communication with the primary node, namely, the base station 310.

In addition, in a communication domain in local area wireless communication, a schematic diagram of a system in the communication domain in local area wireless communication is obtained by replacing the base station 310 in FIG. 3 with an access point (access point, AP). The AP may be a wireless AP, for example, may be a wireless router, a wireless gateway, or a wireless bridge. Similarly, the AP may be a primary node in the communication domain. The UE may also be referred to as a terminal (station, STA), and is a secondary node. The UE may perform wireless communication with the AP.

Communication connection relationships between the primary nodes and the secondary nodes in the communication domain in wide area wireless communication and the communication domain in local area wireless communication may also be the connection relationships in the communication domains shown in FIG. 1(b) and FIG. 1(c). For details, refer to the foregoing descriptions. Details are not described herein again.

Daily, a plurality of users may have a requirement of connecting to a same device in a Bluetooth manner. For example, several friends want to simultaneously enjoy music on a same smartphone through Bluetooth headsets. To better support this requirement, a concept of a connected isochronous stream (connected isochronous stream, CIS) is introduced in short-range communication. The CIS is logical transport, and the CIS may enable a connected device to transmit isochronous data in either direction (either direction). The CIS supports a variable-size data packet and transmission of one or more data packets in each isochronous event (isochronous event).

FIG. 3A is a schematic diagram of a CIS connection event. A CIS event is an opportunity for exchanging a data packet between a primary node (represented by M in FIG. 3A) and a secondary node (represented by S in FIG. 3A). A start moment of each CIS event is referred to as a CIS anchor. An interval between CIS anchors is a CIS event interval, and may be determined based on an interval (interval) parameter.

Each CIS event may include one or more connection subevents (which may also be referred to as transmission subevents or transmission opportunities, subevents for short). Each subevent is used by the primary node to transmit a data packet to the secondary node. The data packet may follow a response of the secondary node to the primary node. That all subevents in one event need to be used or may not be used is not limited in this application.

In an existing low-power short-range wireless communication technology, a primary node and a secondary node alternately transmit messages to each other. Consequently, a receive and sending relationship needs to be frequently switched, and resource overheads are large. Specifically, the primary node and the secondary node alternately send messages to each other in a connection event, that is, after sending the message to the secondary node, when receiving and sending switching duration expires, the primary node receives the message from the secondary node (that is, the secondary node sends the message to the primary node). In addition, if the connection event needs to be maintained, even if the primary node has no data to be sent, the primary node still needs to continue to send a message to the secondary node (that is, send a message including an empty data packet). As a result, the primary node and the secondary node need to frequently perform receiving and sending switching, overheads are high, and there is a resource waste an asymmetric service. In embodiments of this application, in consideration of the foregoing problems, transmission resources in a ratio M:N in different directions are configured for a transmission node (the primary node or the secondary node) in one transmission opportunity, where M is an integer greater than 0, N is an integer greater than 0, and M+N>2. In this way, the transmission node can perform information transmission more flexibly, and reduce receiving and sending switching frequency, to reduce the overheads. Further, the asymmetric service can better adapt to a service requirement, to improve resource utilization. For descriptions of the transmission opportunity, refer to the related descriptions in FIG. 3A.

The following describes a transmission manner using the foregoing transmission opportunity. Specifically, an embodiment of this application provides a communication method. The communication method includes: A first node communicates with at least one other node in one transmission opportunity. The transmission opportunity includes M first time domain resources and N second time domain resources. The M first time domain resources are for communication in a first direction, that is, are used by the first node to send a message. The N second time domain resources are for communication in a second direction, that is, are used by the first node to receive a message.

It can be learned that, in one transmission opportunity, more than two times of message transmission may be performed between communication nodes. In addition, transmission resources in a ratio M:N in different directions are configured for a transmission node. In this way, the transmission node can perform information transmission more flexibly, and reduce receiving and sending switching frequency.

Time domain resources (the first time domain resources or the second time domain resources) in the foregoing transmission opportunity are resources that can be used and that are configured for a communication node that performs sending by using a time domain resource, namely, resources that can be for transmitting a message in a transmission opportunity and that are provided for the communication node. However, actual use of the resources by the communication node is not limited. The communication node may not use the resources for transmission or use only some resources for transmission based on factors such as an actual transmission status, a service requirement of a transmit end, and a device status. In this case, that a first node communicates with at least one other node in one transmission opportunity may specifically include: The first node sends a message on at least one of the M first time domain resources, and receives a message on at least one of the N second time domain resources.

The transmission opportunity may be for communication between a primary node and a secondary node, or may be for communication between secondary nodes. In this way, compared with that in existing short-range communication, direct transmission between the secondary nodes can be supported, that is, information does not need to be forwarded by the primary node. This improves flexibility of communication between the secondary nodes. The primary node may be referred to as a master node, a central node, or a grand node, and therefore may be referred to as an M node, a C node, or a G node for short. The secondary node may be referred to as a slave node, a peripheral node, or a terminal node, and therefore may be referred to as an S node, a P node, or a T node for short. The following uses the G node and the T node as an example.

The message transmitted between the communication nodes may carry data information or control information. The data information or the control information may be sent in a form of, for example, a data packet (packet), for example, may be a data physical channel PDU (data physical channel PDU).

A transmission opportunity may be referred to as transmission for short, and is for providing an opportunity for information transmission between communication nodes. The transmission opportunity may be referred to as a connection subevent or a transmission subevent. The transmission opportunity may provide a resource for more than two times of transmissions, and may be further for information transmission between more than two nodes; and/or may be further for direct communication between secondary nodes. In addition, at least one transmission opportunity may constitute one transmission group, and one transmission group may be referred to as a connection event, namely, a transmission event.

In addition, the foregoing transmission opportunity may support multicast sending. For example, the first node sends a message by using the first time domain resource, and the message may be sent in a multicast manner. A multicast communication manner means that the message may be received by all nodes in a transmission group, and the transmission group includes a plurality of communication nodes (to be distinguished from the first node, the communication nodes are referred to as second nodes). In this case, the second node in the transmission group may perform feedback by using a plurality of second time domain resources. In this way, multicast communication with feedback to ensure reliability is implemented. As shown in FIG. 3B, the first node performs multicast sending during transmission #1, and a multicast receiving node 1, a multicast receiving node 2, and a multicast receiving node 3 in the transmission group perform feedback during transmission #1. A time interval (an intra-transmission interval) of the multicast receiving node 1, the multicast receiving node 2, and the multicast receiving node 3 relative to multicast sending may be configured by using a parameter, or may be a preset value. Communication during transmission #2 is similar to that during transmission #1, and is not described again. In addition, an inter-transmission interval between transmission (for example, between transmission #2 and transmission #1) may be a preset value, for example, agreed on in a protocol, or may be configured by using a parameter. A 1^{st} time resource for multicast sending during transmission #1 may be understood as the foregoing first time domain resource. In addition, for the first node, a time resource for receiving feedbacks from the multicast receiving node 1, the multicast receiving node 2, and the multicast receiving node 3 may be understood as the foregoing second time domain resource. In other words, the time resource for receiving the feedbacks sent by the multicast receiving node 1, the multicast receiving node 2, and the multicast receiving node 3 may be understood as the foregoing second time domain resource. In addition, an inter-group interval between transmission groups may be a preset value, for example, agreed on in a protocol, or may be configured by using a parameter.

Conversely, the plurality of second nodes in the transmission group may send messages by using a plurality of second time domain resources, and the first node receives the messages on the plurality of second time domain resources, and performs multicast feedback by using one first time domain resource. As shown in FIG. 3C, a node 1, a node 2, and a node 3 in the transmission group send messages during transmission #1, and the first node receives, during transmission #1, the messages sent by the node 1, the node 2, and the node 3, and performs multicast feedback on these messages. Multicast feedback may be performed in subsequent transmission (for example, transmission #2), and multicast feedback of a previously received message may be performed during transmission #1. Communication during transmission #2 is similar to that during transmission #1, and is not described again. A time resource used by the first node to perform multicast feedback during transmission #1 may be understood as the foregoing first time domain resource. In addition, for the first node, a time resource for receiving the messages sent by the node 1, the node 2, and the node 3 may be understood as the foregoing second time domain resource. In other words, the time resource used by the node 1, the node 2, and the node 3 to send the messages may be understood as the foregoing second time domain resource. Descriptions of an intra-transmission interval, an inter-transmission interval, and an inter-transmission-group interval are the same as the foregoing descriptions. Details are not described again.

The feedback may be an automatic repeat request (automatic repeat request, ARQ) feedback message or a hybrid automatic repeat request (hybrid automatic repeat request, HARQ) feedback message. This is not limited in embodiments of this application.

The foregoing transmission opportunity may be configured by the G node, and both the G node and the T node may perform communication in the foregoing manner by using the transmission opportunity. For example, the first node may be the G node, and the second node may be the T node; or the first node may be the T node, and the second node may be the G node.

For a configuration of the transmission opportunity, the G node may generate configuration information. The configuration information may include a parameter P1. The parameter P1 indicates a size (namely, a time domain length) of the transmission opportunity. A start position of the transmission opportunity may be a start point, as the start position of the transmission opportunity, (namely, an anchor) of a message including a 1^{st} data packet when the transmission opportunity is established. For example, after sending a connection request, the G node sends the 1^{st} data packet, and the T node uses, as the start position, a time point at which the message including the data packet is received. Alternatively, a start position of the transmission opportunity may be indicated by using a parameter P2. Optionally, the configuration information further includes a parameter P3. The parameter P3 is for determining a position and/or a size of each time domain resource in the transmission opportunity. For example, the parameter P3 is for determining the position of the time domain resource, and the size of each time domain resource is preset, for example, agreed on in a protocol. For another example, the parameter P3 is for determining a size and a position of the time domain resource. For example, the parameter P3 includes one or more of the following parameters: a resource start position, a resource size, a resource interval, a resource quantity, a resource end position, and an offset. For example, the parameter P3 includes the offset parameter. A start position of each resource successively offsets, from the start position of the transmission opportunity based on the offset parameter, an offset indicated by the offset parameter. The offset parameter indicates the offset, and start positions of all time domain resources have a same interval, that is, successively offset the same offset. Alternatively, the offset parameter indicates an offset of each time domain resource, and each time domain resource offsets based on a respective offset. For another example, the parameter P3 includes the resource start position parameter, which separately indicates a start position of each time domain resource. For another example, if the parameter P3 includes the resource quantity, the transmission opportunity may be split into time domain resources of a same size based on the resource quantity. The parameter P3 may further include the resource interval parameter, which indicates a size between an end position of a previous resource and a start position of a next resource of adjacent resources. In this case, the transmission opportunity may be further split into a plurality of time domain resources based on the resource spacing parameter. The resource size may be preset, or may be indicated by the resource size parameter. Sizes of the time domain resources in the transmission opportunity may be the same. In this case, a parameter may be for indication. When sizes of the time domain resources in the transmission opportunity are different, resource sizes of the time domain resources may be separately indicated, or resource sizes are determined according to a preset resource change rule. Alternatively, the resource size parameter may be replaced with the resource end position parameter, to determine the time domain resource with reference to the resource start position. Content of the parameter P3 may be any one or any combination of the foregoing parameters. This is not limited in embodiments of this application provided that the time domain resource in the transmission opportunity can be configured or determined by using the parameter P3.

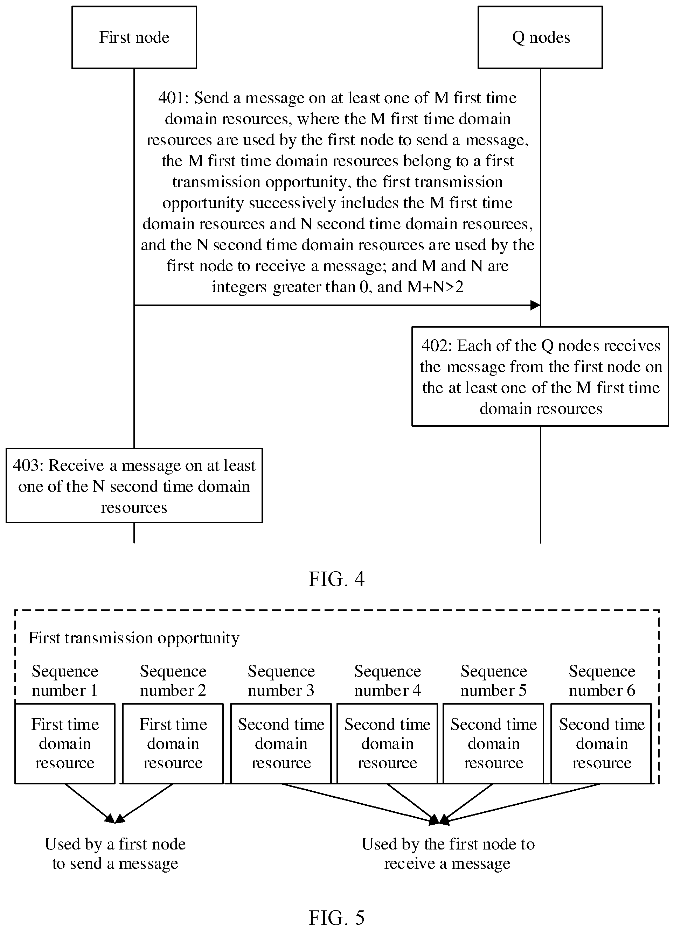

The transmission manner using the transmission opportunity may be applied to various communication domains, for example, may be applied to any one of the possible communication domains in FIG. 1(a) to FIG. 3. With reference to FIG. 4, the following describes a communication method provided in an embodiment of this application. As shown in FIG. 4, the communication method provided in this embodiment of this application may include but is not limited to the following steps.

401: A first node sends a message to each of Q nodes on at least one of M first time domain resources.

The M first time domain resources are used by the first node to send a message, and the M first time domain resources belong to a first transmission opportunity. The first transmission opportunity includes a plurality of time domain resources. The plurality of time domain resources include the M first time domain resources and N second time domain resources. The N second time domain resources are used by the first node to receive a message. M is an integer greater than 0, N is an integer greater than 0, and M+N>2. Q is an integer greater than 0.

Optionally, if Q is equal to 1, the first node communicates with only one node. This case is a unicast communication manner. If Q is greater than 1, the first node may communicate with a plurality of nodes. This case is a communication manner in which a plurality of pieces of unicast are performed simultaneously or a multicast communication manner.

Optionally, the first transmission opportunity may successively include the M first time domain resources and the N second time domain resources.

For ease of understanding of the first transmission opportunity, refer to FIG. 5. FIG. 5 is a schematic diagram of a transmission opportunity by using an example in which M is 2 and N is 4. It can be learned that the first transmission opportunity includes six time domain resources. A 1^{st} time domain resource and a 2^{nd} time domain resource are first time domain resources used by the first node to send the message. A 3^{rd} time domain resource, a 4^{th} time domain resource, a 5^{th} time domain resource, and a 6^{th} time domain resource are second time domain resources used by the first node to receive the message. It should be noted that the M first time domain resources and the N second time domain resources in the first transmission opportunity may alternatively be configured alternately. To be specific, a second time domain resource may be configured between two first time domain resources, and/or a first time domain resource may be configured between two second time domain resources.

In addition, in the example described in this embodiment of this application, an example quantity of time domain resources included in the first transmission opportunity and an example quantity of time domain resources included in a subsequent second transmission opportunity constitute no limitation on embodiments of this application. A specific quantity of time domain resources included in a transmission opportunity is not limited in this application.

A time domain resource in the first transmission opportunity is for message transmission on a first frequency hopping channel (hopping channel). In other words, the time domain resource in the first transmission opportunity is for message transmission on a same frequency hopping channel. In a specific embodiment, the communication method in this embodiment of this application is applied to the communication domain described above. A primary node in the communication domain may manage and configure a transmission resource of the communication domain, and has a function of scheduling a resource for a communication link between communication nodes in the communication domain. For example, the primary node may send resource configuration signaling to a secondary node in the communication domain. After receiving the resource configuration signaling from the primary node, the secondary node may perform message transmission based on a configuration indicated in the signaling. The signaling may include one or more of the following resource configuration indications:
(1) an indication of a link type, which may indicate, for example, that the link type is a direct link, a multicast link, an isochronous link, or an asynchronous link;
(2) an indication of an identifier of a link, where the identifier of the link may uniquely identify one communication link in the communication domain; and
(3) a transmission resource indication, which includes, for example, an indication of a period and a length of a transmission opportunity, and a time start point of at least one transmission opportunity, may further include, for example, an indication of a frequency domain resource like a frequency used in the transmission opportunity, and may further include, for example, one or more of a start time point, a time granularity, a preset time interval, a quantity of transmission times, and a transmission end time point of each transmission opportunity, and a transmission order and a quantity of transmission times of a node in communication. One transmission opportunity includes resources for a plurality of times of transmission, and a quantity of the plurality of times is evenly allocated. For ease of understanding of the period and the length of the transmission opportunity, an example is provided for description. Refer to Table 1. It is assumed that the period of the transmission opportunity is 100 milliseconds, and the length of the transmission opportunity is 20 milliseconds. In this case, a time start point of one transmission opportunity is after every 100 milliseconds, and each transmission opportunity occupies 20 milliseconds for sending and receiving messages.

**Table 1**

| Transmission opportunity | Transmission opportunity 1 | Transmission opportunity 2 | ... | Transmission opportunity K |
|---|---|---|---|---|
| Time start point | 0 milliseconds | 100 milliseconds | ... | (K-1)×100 milliseconds |
| Time end point | 20 milliseconds | 120 milliseconds | ... | (K-1)×100+20 milliseconds |

Based on the foregoing descriptions, before transmitting a message between nodes in the communication domain, the primary node has configured a specific time domain resource, and optionally, may further configure a link type and/or a link identifier of a specific transmission link. The first transmission opportunity is a plurality of time domain resources configured by the primary node. In this application, one transmission opportunity may include more than two time domain resources, and each time domain resource is for transmitting one message. That one message is transmitted on one time domain resource means that a source node sends the message on the time domain resource, and a destination node receives the message on the time domain resource at the same time. The source node is a node that sends the message, and the destination node is a node that receives the message. In this application, one message may be one data packet, one packet, one piece of control information, one piece of control signaling, or the like. In addition, there is an interval between adjacent time domain resources in the transmission opportunity, and a length of each time domain resource may be configured or predefined.

In a specific embodiment, the Q nodes include one or more secondary nodes in a first node set in the foregoing communication domain.

In a possible implementation, the first node is a primary node in the foregoing communication domain. In this implementation, a system architecture of the communication domain may be the system architecture shown in FIG. 1(a), FIG. 1(b), or FIG. 1(c). If the system architecture is the system architecture shown in FIG. 1(a) and FIG. 1(b), secondary nodes in the first node set cannot communicate with each other. If the system architecture is the system architecture shown in FIG. 1(c), secondary nodes in the first node set may communicate with each other.

Alternatively, in another possible implementation, the first node is one of nodes included in a second node set. The second node set includes one or more secondary nodes in the foregoing communication domain. Any node in the second node set is different from any node in the first node set. In this implementation, a system architecture of the communication domain may be the system architecture shown in FIG. 1(b) or FIG. 1(c). If the system architecture is the system architecture shown in FIG. 1(b), secondary nodes in each of the first node set and the second node set may or may not communicate with each other, which is specifically determined based on an actual case. However, any secondary node in the first node set may communicate with any secondary node in the second node set. If the system architecture is the system architecture shown in FIG. 1(c), any two secondary nodes in each of the first node set and the second node set may communicate with each other. In addition, any secondary node in the first node set may communicate with any secondary node in the second node set.

In an existing solution, direct communication cannot be implemented between the secondary nodes in the communication domain. However, in the foregoing implementation, direct communication between the secondary nodes can be implemented, and transmission of a plurality of messages between one or more nodes in the first node set and one or more nodes in the second node set can be implemented in one transmission opportunity. In this implementation, a communication channel between the nodes is extended, and communication efficiency between the nodes is also improved. Alternatively, in another possible implementation, the first node is a secondary node in the first node set, and any two secondary nodes in the first node set may communicate with each other. In this implementation, a system architecture of the communication domain may be the system architecture shown in FIG. 1(c). In an existing solution, direct communication cannot be implemented between the secondary nodes in the communication domain. However, in this implementation, direct communication between the any two secondary nodes can be implemented, and transmission of a plurality of messages between a plurality of any secondary nodes in the first node set can be implemented in one transmission opportunity. In this implementation, a communication channel between the nodes is extended, and communication efficiency between the nodes is also improved.

In a possible implementation, there may be two possible implementations in which a first node sends a message to each of Q nodes on at least one of M first time domain resources.

Implementation 1: When M is greater than 1, and the M first time domain resources are consecutive time domain resources in the first transmission opportunity, the first node sends the message on each of the M first time domain resources. In this case, the first node continuously sends M messages to each of the Q nodes. For example, in FIG. 5, the first node may continuously send two messages to each of the Q nodes on first two first time domain resources in the first transmission opportunity. When Q is greater than 1, a manner in which the first node sends a message to each of the Q nodes is the multicast communication manner.

Implementation 2: When M is greater than 1, for the M first time domain resources that are used by the first node to send a message in the first transmission opportunity, the first node may not sent a message on one or more resources in the M first time domain resources based on a factor, for example, a message transmission status (for example, whether a previously transmitted message is correctly received, or a quantity of continuous receiving failures of a previously transmitted message), a transmit end service requirement (for example, whether there is to-be-transmitted service data currently or whether to wait transmission of other service data), and/or a device status (for example, a buffer of a receiving node is full or a sending node has not yet updated a to-be-sent message in time), but the first node may normally send a message on a first time domain resource other than the one or more resources in the M first time domain resources. In other words, when the foregoing factor occurs, the first node does not send a message to each of the Q nodes on the one or more resources in the M first time domain resources. For example, in FIG. 5, due to the foregoing factor, the first node does not send a message on the 2^{nd} first time domain resource, but sends a message to each of the Q nodes on the 1^{st} first time domain resource.

In a possible implementation, in Implementation 2, if the first node does not send a message to each of the Q nodes by using the one or more resources in the M first time domain resources, the first node may send information in a transmission opportunity before the first transmission opportunity to notify the Q nodes.

402: Each of the Q nodes receives the message from the first node on the at least one of the M first time domain resources.

It can be learned from the foregoing descriptions that a source node sends a message on one time domain resource, and a destination node may receive the message on the time domain resource at the same time. Therefore, when the first node sends the message to each of the Q nodes on the at least one of the M first time domain resources, each of the Q nodes can receive the message from the first node on the at least one of the M first time domain resources.

In a possible implementation, when M is greater than 1, and the M first time domain resources are consecutive time domain resources in the first transmission opportunity, if the first node sends a message on each of the M first time domain resources, each of the Q nodes may continuously receive M messages on the M first time domain resources.

In another possible implementation, when M is greater than 1, if the first node does not send a message on the one or more resources in the M first time domain resources due to the factor described in Implementation 2, each of the Q nodes cannot receive the message on the one or more resources in the M first time domain resources, but may receive the message from the first node on a first time domain resource other than the one or more resources. Optionally, if the first node sends information in a transmission opportunity before the first transmission opportunity to notify the Q nodes that the first node does not send the message on the one or more resources in the M first time domain resources, the Q nodes may not receive the message on the one or more resources in the M first time domain resources.

403: The first node receives a message on at least one of the N second time domain resources.

In a specific embodiment, after receiving the message from the first node in the first transmission opportunity, the Q nodes may send messages to the first node in the first transmission opportunity. Specifically, the N second time domain resources included in the first transmission opportunity are used by the first node to receive the message, and are also used by the Q nodes to successively send the messages. In other words, the Q nodes may successively send the messages on the N second time domain resources, and the first node may successively receive the messages from the Q nodes on the N second time domain resources. Optionally, a time domain resource in the N second time domain resources may be further used by another node other than the Q nodes to send a message.

For ease of understanding, FIG. 5 is used as an example for description. It is assumed that the Q nodes are two nodes, which are respectively referred to as a node 1 and a node 2. In FIG. 5, the node 1 may send a message to the first node on the 3^{rd} time domain resource and the 4^{th} time domain resource. The node 2 may send a message to the first node on the 5^{th} time domain resource and the 6^{th} time domain resource. Alternatively, the Q nodes are four nodes, which are respectively referred to as a node 1, a node 2, a node 3, and a node 4. In FIG. 5, the node 1 may send a message to the first node on a 3^{rd} time domain resource. The node 2 may send a message to the first node on a 4^{th} time domain resource. The node 3 may send a message to the first node on a 5^{th} time domain resource. The node 4 may send a message to the first node on a 6^{th} time domain resource. In a possible implementation, when the Q nodes include the one or more secondary nodes in the first node set in the foregoing communication domain, and the first node is a node included in the second node set, each of the Q nodes may send a message to the first node on the second time domain resource, and may further send a message to one or more nodes other than the first node in the second node set on the second time domain resource. For example, the first transmission opportunity in FIG. 5 is used as an example. It is assumed that the second node set includes a node 1 (it is assumed that the node 1 is the first node) and a node 2, and the Q nodes are two nodes, which are respectively referred to as a node 3 and a node 4. In this case, the node 1 may send messages to the node 3 and the node 4 on the 1^{st} time domain resource in the first transmission opportunity. The node 2 may send messages to the node 3 and the node 4 on the 2^{nd} time domain resource in the first transmission opportunity. The node 3 may send messages to the node 1 and the node 2 on the 3^{rd} time domain resource and the 4^{th} time domain resource in the first transmission opportunity. The node 4 may send messages to the node 1 and the node 2 on the 5^{th} time domain resource and the 6^{th} time domain resource in the first transmission opportunity.

In a possible implementation, if all the first node and the Q nodes are the secondary nodes in the first node set, and the any two secondary nodes in the first node set can communicate with each other, each of the Q nodes may send a message to the first node on the second time domain resource, and may further send a message to one or more nodes other than the node in the Q nodes on the second time domain resource. For example, in the example in FIG. 5, the node 1 may send messages to the first node and the node 2 on the 3^{rd} time domain resource and the 4^{th} time domain resource. The node 2 may send messages to the first node and the node 1 on the 5^{th} time domain resource and the 6^{th} time domain resource. Alternatively, the node 1 may send messages to the first node, the node 2, and the node 3 on the 3^{rd} time domain resource. The node 2 may send messages to the first node and the node 1 on the 4^{th} time domain resource. The node 3 may send messages to the first node, the node 1, and the node 4 on the 5^{th} time domain resource. The node 4 may send messages to the first node and the node 3 on the 6^{th} time domain resource.

In a possible implementation, when N is greater than 1, although the N second time domain resources are used by the Q nodes to successively send the messages, a node in the Q nodes may not send a message on a corresponding second time domain resource due to another reason, for example, a fault or missing sending. In this case, although the second time domain resource is configured for the node to send the message, the second time domain resource is actually not used by the node to send the message. For example, in the example in FIG. 5, the node 1 may send a message to the first node on the 3^{rd} time domain resource and the 4^{th} time domain resource. However, the node 1 may cannot send a message on the 4^{th} time domain resource due to some reasons.

When the plurality of nodes successively send the messages to the first node on the at least one of the N second time domain resources, the first node may receive the messages on the at least one of the N second time domain resources. The plurality of nodes may be the Q nodes, or may be the Q nodes and another node other than the Q nodes.

In a possible implementation, when N is greater than 1, and the N second time domain resources are consecutive time domain resources in the first transmission opportunity, if the plurality of nodes successively send the messages on all the N second time domain resources, the first node may continuously receive N messages in the N second time domain resources.

In another possible implementation, when N is greater than 1, if a node of the plurality of nodes may not send a message on a corresponding second time domain resource due to another reason, for example, a fault or missing sending, the first node cannot receive the message on the corresponding second time domain resource, and may receive the message on the second time domain resource other than the corresponding second time domain resource.

In a possible implementation, the first transmission opportunity further includes K second time domain resources, and K is an integer greater than 0. The K second time domain resources may be used by the first node to receive a message before step 401. Specifically, before step 401, one or more of the Q nodes may send a message to the first node on at least one of the K second time domain resources. The first node may receive, on the at least one of the K second time domain resources, the message sent by the one or more of the Q nodes.

In a possible implementation, the first transmission opportunity further includes L third time domain resources. The third time domain resource is used by another node other than the first node to send and receive messages, and L is an integer greater than 0. Specifically, if the first node is a primary node, the third time domain resource is for sending or receiving a message between secondary nodes in the first node set. Alternatively, if the first node is a node included in the second node set, the third time domain resource is used by a node in the first node set or a node other than the first node in the second node set to send or receive a message. Particularly, the third time domain resource is used by a node other than the first node in the second node set to send the message and the node in the first node set to receive the message. Alternatively, if the first node is a node in the first node set, the third time domain resource is used by a node other than the first node in the first node set to send or receive a message.

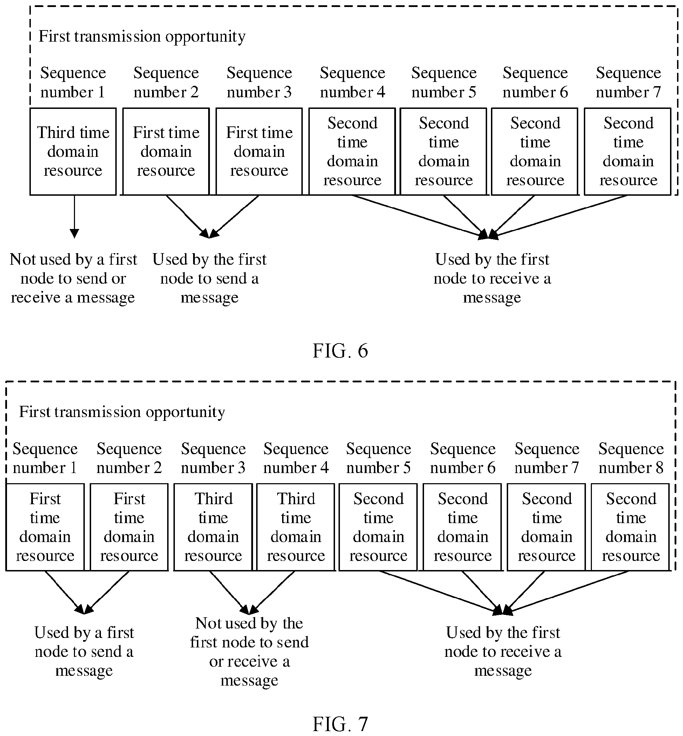

For example, the L third time domain resources may be configured before the M first time domain resources, or may be configured after the N second time domain resources, or may be configured between the M first time domain resources and the N second time domain resources. For ease of understanding, for example, refer to FIG. 6, FIG. 7, and FIG. 8.

FIG. 6 is a schematic diagram of a transmission opportunity by using an example in which L is 1, M is 2, and N is 4. It can be learned that the first transmission opportunity successively includes seven time domain resources. A 1^{st} time domain resource in the first transmission opportunity is the third time domain resource not used by the first node to send or receive the message. A 2^{nd} time domain resource and a 3^{rd} time domain resource are the first time domain resources used by the first node to send the message. A 4^{th} time domain resource to a 7^{th} time domain resource are the second time domain resources used by the first node to receive the message. The 3^{rd} time domain resource and the 4^{th} time domain resource in the middle of the first transmission opportunity are not used by the first node to send or receive the message, and are used by the another node other than the first node to send and receive the messages.

For example, in FIG. 6, the Q nodes are one node, which is referred to as a node 1. In the first transmission opportunity, in addition to the first node and the node 1 that may send and receive messages, another node, for example, a node 2, in the communication domain may also send and receive messages in the first transmission opportunity. Specifically, in the first transmission opportunity,
the node 2 sends a message to the node 1 on the 1^{st} time domain resource in the first transmission opportunity, and the node 1 may also receive the message from the node 2 on the 1^{st} time domain resource.

The first node sends a message to the node 1 on the 2^{nd} time domain resource and the 3^{rd} time domain resource in the first transmission opportunity. The node 1 may also receive the message from the first node on the 2^{nd} time domain resource and the 3^{rd} time domain resource.

The node 1 sends messages to the node 2 and the first node on the 4^{th} time domain resource to the 7^{th} time domain resource in the first transmission opportunity. The node 2 and the first node may also receive the message from the node 1 on the 4^{th} time domain resource to the 7^{th} time domain resource.

FIG. 7 is a schematic diagram of a transmission opportunity by using an example in which M is 2, L is 2, and N is 4. It can be learned that the first transmission opportunity successively includes eight time domain resources. In the first transmission opportunity, first two time domain resources that are successively arranged are the first time domain resources used by the first node to send the message, and last four time domain resources that are successively arranged are the second time domain resources used by the first node to receive the message. A 3^{rd} time domain resource and a 4^{th} time domain resource in the middle of the first transmission opportunity are the third time domain resources, are not used by the first node to send or receive the message, and are used by the another node other than the first node to send and receive the message.

For example, in FIG. 7, it is assumed that the Q nodes are two nodes, which are respectively referred to as a node 1 and a node 2. In the first transmission opportunity, in addition to the first node, the node 1, and the node 2 that may send and receive messages, another node, for example, a node 3, in the communication domain may also send and receive messages in the first transmission opportunity. Specifically, in the first transmission opportunity,
the first node sends messages to the node 1 and the node 2 on a 1^{st} time domain resource and a 2^{nd} time domain resource. The node 1 and the node 2 each may receive two messages from the first node on the 1^{st} time domain resource and the 2^{nd} time domain resource.

The node 3 may send messages to the node 1 and the node 2 on the 3^{rd} time domain resource and the 4^{th} time domain resource. The node 1 and the node 2 each may receive two messages from the node 3 on the 3^{rd} time domain resource and the 4^{th} time domain resource.

The node 1 may send messages to the first node and the node 3 on a 5^{th} time domain resource and a 6^{th} time domain resource. The first node and the node 3 each may receive two messages from the node 1 on the 5^{th} time domain resource and the 6^{th} time domain resource.

The node 2 may send messages to the first node and the node 3 on a 7^{th} time domain resource and an 8^{th} time domain resource. The first node and the node 3 each may receive two messages from the node 1 on the 7^{th} time domain resource and the 8^{th} time domain resource.

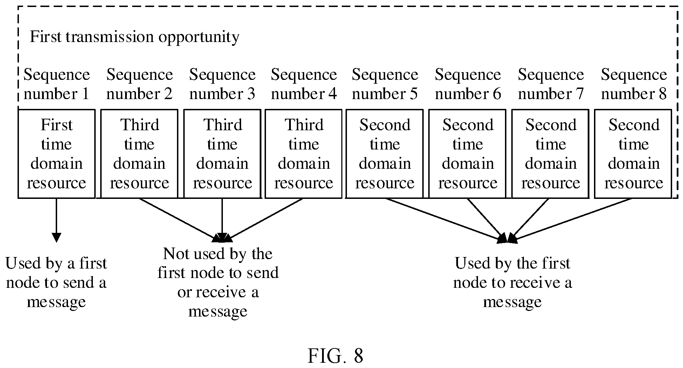

Alternatively, in another possible example, refer to FIG. 8. In FIG. 8, it is assumed that the Q nodes are two nodes, which are respectively referred to as a node 1 and a node 2. In the first transmission opportunity, in addition to the first node, the node 1, and the node 2 that may send and receive messages, other nodes, for example, a node 3 and a node 4, in the communication domain may also send and receive messages in the first transmission opportunity. Specifically, in the first transmission opportunity,
the first node sends messages to the node 1 and the node 2 on a 1^{st} time domain resource. The node 1 and the node 2 each may receive the message from the first node on the 1^{st} time domain resource.

The node 3 sends messages to the node 4, the node 1, and the node 2 on a 2^{nd} time domain resource. The node 4, the node 1, and the node 2 all may receive the message from the node 3 on the 2^{nd} time domain resource.

The node 4 sends messages to the node 3, the node 1, and the node 2 on a 3^{rd} time domain resource and a 4^{th} time domain resource. The node 3, the node 1, and the node 2 all may receive the message from the node 4 on the 3^{rd} time domain resource and the 4^{th} time domain resource.

The node 1 may send messages to the first node, the node 3, and the node 4 on a 5^{th} time domain resource and a 6^{th} time domain resource. The first node, the node 3, and the node 4 each may receive two messages from the node 1 on the 5^{th} time domain resource and the 6^{th} time domain resource.

The node 2 may send messages to the first node, the node 3, and the node 4 on a 7^{th} time domain resource and an 8^{th} time domain resource. The first node, the node 3, and the node 4 each may receive two messages from the node 1 on the 7^{th} time domain resource and the 8^{th} time domain resource.

In a possible implementation, composition of each of the messages sent and received on the foregoing transmission resources may include a sequence part, a control information part, and a data part. The sequence part includes at least one predefined or preconfigured sequence and/or a preset signal. The control information part includes one or more of an identifier of data, a length of the data, a modulation and/or coding scheme of the data, and feedback information for the message. The data part bears the data. The borne data may be a protocol data unit PDU, service data, higher layer signaling, or the like. During specific implementation, the data part may include the data or the data is empty.

For example, the at least one preset sequence and/or the preset signal included in the sequence part are/is specifically a preamble sequence (or a preamble signal) and/or a synchronization sequence. The preamble sequence (or the preamble signal) is used by a receive end to perform automatic gain control, and the synchronization sequence is used for synchronization of the receive end, and the like.

In a possible implementation, in addition to that a message can be transmitted between the first node and the Q nodes in the first transmission opportunity, the primary node further configures a message to be further transmitted between the first node and the Q nodes in one or more other transmission opportunities. Any two transmission opportunities in the one or more other transmission opportunities and the first transmission opportunity do not overlap. Transmission of the message includes sending the message and receiving the message. A time domain resource in each of the one or more other transmission opportunities is for transmitting a message on a frequency hopping channel. Frequency hopping channels for transmitting messages on time domain resources in different transmission opportunities may be the same or different.

In a specific embodiment, the first transmission opportunity includes P time domain resources, and P is an integer greater than 2. To facilitate overall resource configuration and subsequent convenient backhaul of a feedback message, the primary node may configure each of the one or more other transmission opportunities to also include P time domain resources, and configure each of the one or more other transmission opportunities to have a same purpose as a time domain resource with a same sequence number in the first transmission opportunity, or configure each of the one or more other transmission opportunities to have a same resource pattern as the first transmission opportunity. In addition, time domain resources with a same sequence number in two transmission opportunities may also be time domain resources that are in a same time domain position and that are in the two transmission opportunities.

The same purpose means that nodes using the time domain resources are the same and transmission types are the same. The transmission type includes two types: sending a message and receiving a message. For the type of sending a message, that the nodes using the time domain resources are the same means that nodes using the time domain resources to send messages are the same, and nodes receiving the messages are also the same. For the type of receiving a message, that the nodes using the time domain resources are the same means that nodes using the time domain resources to receive messages are the same, and nodes sending the received messages are also the same. It should be noted that messages (or data carried in messages) sent or received on time domain resources with a same purpose in two transmission opportunities may be the same or different, which is specifically determined based on an actual case.

In addition, optionally, for a case in which a node does not use, due to the factor described in Implementation 2 in step 401, a corresponding time domain resource in a transmission opportunity to send or receive a message, cases of using time domain resources in any two transmission opportunities may be the same or different. For example, a transmission opportunity 1 and a transmission opportunity 2 each include three time domain resources. All first two time domain resources are used by a node 1 to send a message to a node 2 and the node 2 to receive the message. Both 3^{rd} time domain resources are used by the node 2 to send a message to the node 1 and the node 1 to receive the message. However, in the transmission opportunity 1, the node 1 does not use, due to the factor described in Implementation 2 in step 401, a 2^{nd} time domain resource to send the message to the node 2. Therefore, the node 2 does not receive the message on the 2^{nd} time domain resource either. The 1^{st} time domain resource and the 3^{rd} time domain resource in the transmission opportunity 1 are normally used. In the transmission opportunity 2, all the three time domain resources are normally used, and there is no time domain resource that is not used due to the factor described in Implementation 2 in step 401.

For ease of understanding of the same purpose of the time domain resources with the same sequence number in the foregoing different transmission opportunities, the following uses the first transmission opportunity and the second transmission opportunity as an example for description. The second transmission opportunity may be any one of the foregoing one or more other transmission opportunities. It is assumed that the message sent in step 401 is a message sent by the first node to the Q nodes on an r1^{th} time domain resource to an (r1+M)^{th} time domain resource in the first transmission opportunity, where r1 is an integer greater than 0 and less than or equal to P-M. In this case, an r1^{th} time domain resource to an (r1+M)^{th} time domain resource in the second transmission opportunity are also used by the first node to send a message to each of the Q nodes. It is assumed that each of the Q nodes in step 402 receives the message from the first node on the r1^{th} time domain resource to the (r1+M)^{th} time domain resource in the first transmission opportunity. In this case, the r1^{th} time domain resource to the (r1+M)^{th} time domain resource in the second transmission opportunity are also used by the Q nodes to receive the M messages from the first node.

It is assumed that, in step 403, a node in the Q nodes sends a message to the first node on an r2^{th} time domain resource in the first transmission opportunity, where r2 is an integer greater than 0 and less than or equal to P. In this case, an r2^{th} time domain resource in the second transmission opportunity is also used by the node to send the message to the first node.

It is assumed that, in step 404, the first node receives, on the r2^{th} time domain resource in the first transmission opportunity, a message sent by a node in the Q nodes. In this case, the r2^{th} time domain resource in the second transmission opportunity is also used by the first node to receive the message from the node.

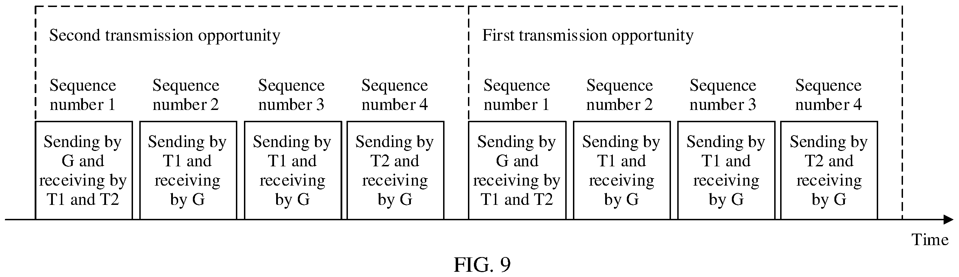

For example, refer to FIG. 9. In FIG. 9, it is assumed that the first transmission opportunity and the second transmission opportunity are used for message transmission between the primary node (represented by G) and the secondary nodes (for example, a secondary node 1 (represented by T1) and a secondary node 2 (represented by T2)) in the communication domain, and the first transmission opportunity and the second transmission opportunity each include four time domain resources. During configuration, the primary node may configure an i^{th} time domain resource in the first transmission opportunity and an i^{th} time domain resource in the second transmission opportunity to have a same purpose, and values of i are 1, 2, 3, and 4. A small block shown in FIG. 9 represents a time domain resource. In addition, that a small block shown in FIG. 9 includes "Sending by G and receiving by T1 and T2" indicates that the primary node sends messages to the secondary node 1 and the secondary node 2 on a time domain resource represented by the small block, and the secondary node 1 and the secondary node 2 receive the message from the primary node on the time domain resource. Another case is similar. Details are not described again.

For example, in FIG. 9, both 1^{st} time domain resources in the first transmission opportunity and the second transmission opportunity are used by the primary node to send messages to the secondary node 1 and the secondary node 2, and the secondary node 1 and the secondary node 2 receive the messages from the primary node on the 1^{st} time domain resources. However, it should be noted that data carried in the message sent by the primary node to the secondary node 1 and the secondary node 2 on the 1^{st} time domain resource in the first transmission opportunity is the same as or different from data carried in the message sent by the primary node to the secondary node 1 and the secondary node 2 on the 1^{st} time domain resource in the second transmission opportunity. For whether the data is specifically the same or different, refer to the following descriptions. Details are not described herein.

For another example, in FIG. 9, all 2^{nd} time domain resources and 3^{rd} time domain resources in the first transmission opportunity and the second transmission opportunity are used by the secondary node 1 to send messages to the primary node, and the primary node receives the messages from the secondary node 1 on the 2^{nd} time domain resources and the 3^{rd} time domain resources. However, it should be noted that data carried in the message sent by the secondary node 1 to the primary node on the 2^{nd} time domain resource in the first transmission opportunity may be the same as or different from data carried in the message sent by the secondary node 1 to the primary node on the 2^{nd} time domain resource in the second transmission opportunity. Data carried in the message sent by the secondary node 1 to the primary node on the 3^{rd} time domain resource in the first transmission opportunity may be the same as or different from data carried in the message sent by the secondary node 1 to the primary node on the 3^{rd} time domain resource in the second transmission opportunity.

For another example, in FIG. 9, both 4^{th} time domain resources in the first transmission opportunity and the second transmission opportunity are used by the secondary node 2 to send messages to the primary node, and the primary node receives the messages from the secondary node 2 on the 4^{th} time domain resources. However, it should be noted that data carried in the message sent by the secondary node 2 to the primary node on the 4^{th} time domain resource in the first transmission opportunity may be the same as or different from data carried in the message sent by the secondary node 2 to the primary node on the 4^{th} time domain resource in the second transmission opportunity. In FIG. 9, that the primary G node sends the messages to the two secondary nodes T1 and T2 is the foregoing multicast communication manner. The messages sent by the G node to T1 and T2 on the 1^{st} time domain resource in the first transmission opportunity include feedback information for messages received by the G node on the 2^{nd} time domain resource to the 4^{th} time domain resource in the second transmission opportunity.

In a possible implementation, a message sent by a node each time may include a first identifier. The first identifier indicates that data in the message in which the node is located is new data that is not transmitted, or indicates that data in the message in which the node is located is the same as data transmitted on a resource corresponding to a predefined rule. For example, whether data of a message sent by the node in the first transmission opportunity is the same as data of a message sent by the node on a time domain resource with a same sequence number in the second transmission opportunity may be determined by using the first identifier. The following uses, as an example for description, the message transmitted in the first transmission opportunity.

In a specific embodiment, it is assumed that, between the first node and the Q nodes, a message is first transmitted in the second transmission opportunity, and then the message is transmitted in the first transmission opportunity. Subsequently, the first transmission opportunity and the second transmission opportunity are described based on this case. Optionally, the second transmission opportunity and the first transmission opportunity are two adjacent transmission opportunities in time domain. Alternatively, optionally, an interval between the second transmission opportunity and the first transmission opportunity does not include a transmission opportunity for message transmission between the first node and the Q nodes.

In addition, it is assumed that a first message is a message sent by the first node to a second node on an n1^{th} time domain resource in the second transmission opportunity. A second message is a message sent by the first node to the second node on an n1^{th} time domain resource in the first transmission opportunity. Herein, n1 is an integer greater than 0 and less than or equal to P. The second node is any one of the Q nodes. In this case, when the first identifier included in the second message is the same as the first identifier included in the first message, data carried in the second message is the same as data carried in the first message. When the first identifier included in the second message is different from the first identifier included in the first message, data carried in the second message is different from data carried in the first message.

In a specific implementation, the first node that sends the message to the second node on the n1^{th} time domain resource in the first transmission opportunity may determine, based on whether the data that currently needs to be sent is retransmitted data, a value of the first identifier carried in the message that bears the data. If the data is retransmitted data, the first node may set the first identifier in the message that bears the data to be the same as the first identifier in the message sent on the n1^{th} time domain resource in the second transmission opportunity. If the data is new data, the first node may set the first identifier in the message that bears the data to be different from the first identifier in the message sent on the n1^{th} time domain resource in the second transmission opportunity.

Similarly, one or more messages sent by each of the Q nodes to the first node each also include the first identifier. The second node is used as an example. In a specific embodiment, the second node that sends a message to the first node on an n2^{th} time domain resource in the first transmission opportunity may determine, based on whether data that currently needs to be sent is retransmitted data, a value of a first identifier carried in the message that bears the data. If the data is retransmitted data, the second node may set the first identifier in the message that bears the data to be the same as a first identifier in a message sent on an n2^{th} time domain resource in the second transmission opportunity. If the data is new data, the second node may set the first identifier in the message that bears the data to be different from a first identifier in a message sent on an n2^{th} time domain resource in the second transmission opportunity. Herein, n2 is an integer greater than 0 and less than or equal to P.

Whether the data that currently needs to be sent is retransmitted data may be determined based on feedback information sent by a peer node. The feedback information is described in detail below. Details are not described herein.

In a possible implementation, the first identifier may be 0 or 1 that occupies 1 bit.

Optionally, if a first identifier included in a message sent by the first node (or the second node) to the second node (or the first node) on a time domain resource with a sequence number in the second transmission opportunity is 0, when the first node (or the second node) determines that data sent to the second node (or the first node) on a time domain resource with the same sequence number in the first transmission opportunity is retransmitted data, the first node (or the second node) set, to 0, a first identifier in a message that is sent on the time domain resource with the sequence number in the first transmission opportunity and that bears the data. When the first node (or the second node) determines that data sent to the second node (or the first node) on a time domain resource with the same sequence number in the first transmission opportunity is new data, the first node (or the second node) set, to 1, a first identifier in a message that is sent on the time domain resource with the sequence number in the first transmission opportunity and that bears the data.

Alternatively, optionally, if a first identifier included in a message sent by the first node (or the second node) to the second node (or the first node) on a time domain resource with a sequence number in the second transmission opportunity is 1, when the first node (or the second node) determines that data sent to the second node (or the first node) on a time domain resource with the same sequence number in the first transmission opportunity is retransmitted data, the first node (or the second node) set, to 1, a first identifier in a message that is sent on the time domain resource with the sequence number in the first transmission opportunity and that bears the data. When the first node (or the second node) determines that data sent to the second node (or the first node) on a time domain resource with the same sequence number in the first transmission opportunity is new data, the first node (or the second node) set, to 0, a first identifier in a message that is sent on the time domain resource with the sequence number in the first transmission opportunity and that bears the data.

Alternatively, optionally, regardless of a transmission opportunity in which a message is sent, a first identifier included in a newly sent message is uniformly marked as 0, and a first identifier included in a retransmitted message is uniformly marked as 1. Alternatively, optionally, regardless of a transmission opportunity in which a message is sent, a first identifier included in a newly sent message is uniformly marked as 1, and a first identifier included in a retransmitted message is uniformly marked as 0.

It should be noted that the first identifier is not limited to 0 or 1, and may alternatively be another identifier, for example, "N" or "Y". A specific value of the first identifier is not limited in this application.

In a possible implementation, if the primary node configures the link identifier of the specific transmission link before data transmission is performed between the first node and the Q nodes, for the sending node that is the secondary node, the primary node may send the specifically configured link identifier to the corresponding secondary node by using control signaling. For the sending node that is a primary node, the primary node stores the corresponding link identifier. Then, when the primary node and the secondary node send a corresponding message, the corresponding link identifier may be added to the sent message. The link identifier added to the message is an identifier of a link for transmitting the message.

Specifically, in step 401, each of the messages sent by the first node to the Q nodes includes an identifier of a link between the first node and the Q nodes.

Optionally, it is assumed that link identifiers configured by the primary node for Q links between the first node and the Q nodes are the same. In this case, the messages sent by the first node to the Q nodes each include one link identifier. In this case, a plurality of links between the first node and the Q nodes may be considered as a link group. The primary node sets a link identifier for the link group. In other words, all the links in the link group may be marked by using the link identifier. Optionally, it is assumed that link identifiers configured by the primary node for links between the Q links are different from each other. In this case, the messages sent by the first node to the Q nodes include the identifiers of the Q links. In addition, the messages sent by the first node to the Q nodes include the corresponding link identifiers. Therefore, the messages received by the Q nodes in step 402 also include the corresponding link identifiers.

In step 403, the one or more messages sent by each of the Q nodes to the first node also include a corresponding link identifier. A node in the Q nodes is used as an example. One or more messages sent by the node to the first node include an identifier of a link between the node and the first node. Based on this, the message received by the first node in step 404 also includes a corresponding link identifier.

In the foregoing embodiment, an identifier of a transmission link is carried in a message, so that a node that receives the message can identify whether the message is a target message, to determine a purpose of transmitting the message, so as to filter interference caused by transmission of another message.

In a possible implementation, after receiving a message from a peer node, the first node or the Q nodes may carry feedback information for the received message to a message subsequently sent to the peer node. Specifically, the feedback information may include one or more of the following information: information about whether data is correctly received, information requesting to retransmit the data in the received message, information requesting to send new data, information indicating a value of a first identifier included in a subsequently sent message, and the like. It should be noted that, to conveniently send the feedback information for the message to the peer node, and reduce a quantity of sending times, a manner of sending the feedback information in this embodiment of this application may be implemented based on a case in which the time domain resources with the same sequence number in the foregoing different transmission opportunities have the same purpose.

It can be learned from the specific descriptions of step 401 that the first node may be classified into nodes in three cases. Feedback information carried in messages sent by the nodes in different cases is not necessarily the same. The following describes the feedback information in different cases. The following descriptions are also provided based on the case in which, between the first node and the Q nodes, the message is first transmitted in the second transmission opportunity, and then the message is transmitted in the first transmission opportunity.

Case 1: The first node is a primary node in the communication domain, and the Q nodes are Q secondary nodes in the first node set in the communication domain.

In this case, a message sent by the first node in the first transmission opportunity includes feedback information. The feedback information is feedback information for a message received by the first node in the second transmission opportunity.

Specifically, feedback information included in a message sent by the first node to the second node in the first transmission opportunity is feedback information for a message received by the first node from the second node in the second transmission opportunity. The second node is any one of the Q nodes. Optionally, if the first node occupies a plurality of consecutive time domain resources in the first transmission opportunity to continuously send a plurality of messages to the second node, that is, when M in step 401 is greater than 1, and the M first time domain resources are consecutive time domain resources in the first transmission opportunity, the plurality of continuously sent messages may all include the feedback information for the message received by the first node from the second node in the second transmission opportunity. Alternatively, some messages (one or more messages) of the plurality of continuously sent messages may include the feedback information.

In addition, for the Q nodes, the second node is used as an example. Feedback information included in a message sent by the second node to the first node in the first transmission opportunity is feedback information for the message received by the second node from the first node in the first transmission opportunity.

For ease of understanding, the following uses an example for description. FIG. 9 and the related descriptions of FIG. 9 are used as an example. In FIG. 9, the message sent by the primary node to the secondary node 1 and the secondary node 2 on the 1^{st} time domain resource in the first transmission opportunity includes the following feedback information: feedback information for the message received by the primary node from the secondary node 1 on the 2^{nd} time domain resource and the 3^{rd} time domain resource in the second transmission opportunity, and feedback information for the message received by the primary node from the secondary node 2 on the 4^{th} time domain resource in the second transmission opportunity.

In addition, in FIG. 9, the message sent by the secondary node 1 to the primary node on the 2^{nd} time domain resource and the 3^{r}d time domain resource in the first transmission opportunity includes the following feedback information: feedback information for the message received by the secondary node 1 from the primary node on the 1^{st} time domain resource in the first transmission opportunity.

In addition, in FIG. 9, the message sent by the secondary node 2 to the primary node on the 4^{th} time domain resource in the first transmission opportunity includes the following feedback information: feedback information for the message received by the secondary node 2 from the primary node on the 1^{st} time domain resource in the first transmission opportunity.

Case 2: The first node is one of the secondary nodes included in the second node set, and the Q nodes are Q secondary nodes in the first node set.

In this case, when one or more nodes in the second node set communicate with one or more nodes in the first node set for message transmission, in each of one or more transmission opportunities for communication, the one or more nodes in the second node set send a message before the one or more nodes in the first node set send a message. This implementation can facilitate subsequent sending of the feedback message.

In a specific embodiment, a message sent by the first node in the first transmission opportunity includes feedback information. The feedback information is feedback information for a message received by the first node in the second transmission opportunity. Specifically, based on the fact that, in each transmission opportunity, the one or more nodes in the second node set send the message before the one or more nodes in the first node set send the message, feedback information included in a message sent by the one or more nodes in the second node set to the one or more nodes in the first node set in the first transmission opportunity is feedback information for a message received from the one or more nodes in the first node set in the second transmission opportunity.

For example, feedback information included in a message sent by the first node to the one or more nodes in the first node set in the first transmission opportunity is feedback information for a message received by the first node from the one or more nodes in the first node set in the second transmission opportunity.

Optionally, if the first node occupies a plurality of consecutive time domain resources in the first transmission opportunity to continuously send a plurality of messages to the one or more nodes in the first node set, that is, when M in step 401 is greater than 1, and the M first time domain resources are consecutive time domain resources in the first transmission opportunity, the plurality of continuously sent messages may all include the feedback information for the message received by the first node from the one or more nodes in the first node set in the second transmission opportunity. Alternatively, some messages of the plurality of continuously sent messages may include the feedback information.

In addition, based on the fact that, in each transmission opportunity, the one or more nodes in the second node set send the message before the one or more nodes in the first node set send the message, feedback information included in a message sent by the one or more nodes in the first node set to the one or more nodes in the second node set in the first transmission opportunity is feedback information for a message received from the one or more nodes in the second node set in the first transmission opportunity. For example, it is assumed that the node 2 is one of the one or more nodes in the first node set. In this case, feedback information included in a message sent by the node 2 to the one or more nodes in the second node set in the first transmission opportunity is feedback information for a message received by the node 2 from the one or more nodes in the second node set in the first transmission opportunity.

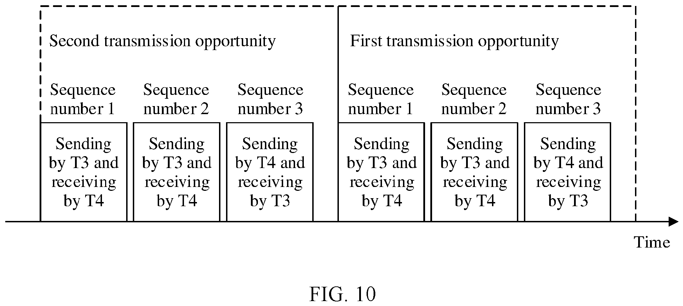

For ease of understanding, the following uses an example for description with reference to FIG. 10. In FIG. 10, it is assumed that the first transmission opportunity and the second transmission opportunity are for message transmission between a secondary node 3 (represented by T3) in the first node set and a secondary node 4 (represented by T4) in the second node set in the communication domain, and the first transmission opportunity and the second transmission opportunity each include three time domain resources. During configuration, the primary node may configure an i^{th} time domain resource in the first transmission opportunity and an i^{th} time domain resource in the second transmission opportunity to have a same purpose, and values of i are 1, 2, and 3. A small block shown in FIG. 10 represents a time domain resource. That a small block shown in FIG. 10 includes "Sending by T3 and receiving by T4" indicates that the secondary node 3 sends a message to the secondary node 4 on a time domain resource represented by the small block, and the secondary node 4 receives the message from the secondary node 3 on the time domain resource. Another case is similar. Details are not described again.

In FIG. 10, all 1^{st} time domain resources and 2^{nd} time domain resources in the first transmission opportunity and the second transmission opportunity are used by the secondary node 3 to send messages to the secondary node 4, and the secondary node 4 receives the messages from the secondary node 3 on the 1^{st} time domain resources and the 2^{nd} time domain resources. However, it should be noted that data carried in the message sent by the secondary node 3 to the secondary node 4 on the 1^{st} time domain resource in the first transmission opportunity may be the same as or different from data carried in the message sent by the secondary node 3 to the secondary node 4 on the 1^{st} time domain resource in the second transmission opportunity. Data carried in the message sent by the secondary node 3 to the secondary node 4 on the 2^{nd} time domain resource in the first transmission opportunity may be the same as or different from data carried in the message sent by the secondary node 3 to the secondary node 4 on the 2^{nd} time domain resource in the second transmission opportunity.

In FIG. 10, both 3^{rd} time domain resources in the first transmission opportunity and the second transmission opportunity are used by the secondary node 4 to send messages to the secondary node 3, and the secondary node 3 receives the messages from the secondary node 4 on the 3^{rd} time domain resources. However, it should be noted that data carried in the message sent by the secondary node 4 to the secondary node 3 on the 3^{rd} time domain resource in the first transmission opportunity may be the same as or different from data carried in the message sent by the secondary node 4 to the secondary node 3 on the 3^{rd} time domain resource in the second transmission opportunity.

Based on the descriptions of FIG. 10, one or all of the messages sent by the secondary node 3 to the secondary node 4 on the 1^{st} time domain resource and the 2^{nd} time domain resource in the first transmission opportunity include the following feedback information: feedback information for the message received by the secondary node 3 from the secondary node 4 on the 3^{rd} time domain resource in the second transmission opportunity. The message sent by the secondary node 4 to the secondary node 3 on the 3^{rd} time domain resource in the first transmission opportunity includes the following feedback information: feedback information for the messages received by the secondary node 4 from the secondary node 3 on the 1^{st} time domain resource and the 2^{nd} time domain resource in the first transmission opportunity.

Case 3: The first node and the Q nodes are the secondary nodes in the first node set, and any two secondary nodes in the first node set may communicate with each other.

In this case, feedback information included in a message sent by the first node to the Q nodes on an n3^{th} time domain resource in the first transmission opportunity includes feedback information for a message received by the first node on a time domain resource after an n3^{th} time domain resource in the second transmission opportunity, and feedback information for a message received by the first node on a time domain resource before the n3^{th} time domain resource in the first transmission opportunity. Herein, n3 is an integer greater than 0 and less than or equal to P.

In addition, for the Q nodes, the second node is used as an example. Feedback information included in a message sent by the second node to the first node on an n4^{th} time domain resource in the first transmission opportunity includes feedback information for a message received by the second node on a time domain resource after an n4^{th} time domain resource in the second transmission opportunity, and feedback information for a message received by the second node on a time domain resource before the n4^{th} time domain resource in the first transmission opportunity. Herein, n4 is an integer greater than 0 and less than or equal to P.

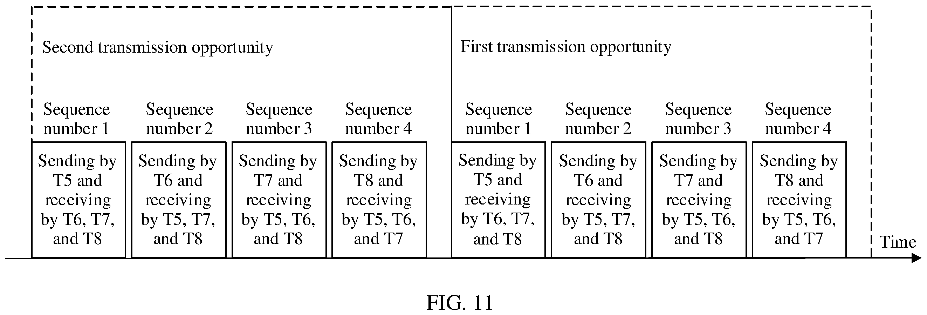

For ease of understanding, the following uses an example for description with reference to FIG. 11. In FIG. 11, it is assumed that the first transmission opportunity and the second transmission opportunity are for message transmission between a secondary node 5 (represented by T5), a secondary node 6 (represented by T6), a secondary node 7 (represented by T7), and a secondary node 8 (represented by T8) in the first node set in the communication domain. A communication manner in which one node shown in FIG. 11 may send messages to a plurality of nodes is a multicast communication manner. The first transmission opportunity and the second transmission opportunity each include four time domain resources. During configuration, the primary node may configure an i^{th} time domain resource in the first transmission opportunity and an i^{th} time domain resource in the second transmission opportunity to have a same purpose, and values of i are 1, 2, 3, and 4. A small block shown in FIG. 11 represents a time domain resource. That a small block shown in FIG. 11 includes "Sending by T5 and receiving by T6, T7, and T8" indicates that the secondary node 5 sends messages to the secondary node 6, the secondary node 7, and the secondary node 8 on a time domain resource represented by the small block, and the secondary node 6, the secondary node 7, and the secondary node 8 receives the message from the secondary node 5 on the time domain resource. Another case is similar. Details are not described again.

In FIG. 11, both 1^{st} time domain resources in the first transmission opportunity and the second transmission opportunity are used by the secondary node 5 to send same messages to the secondary node 6, the secondary node 7, and the secondary node 8, and the secondary node 6, the secondary node 7, and the secondary node 8 receive the messages from the secondary node 5 on the 1^{st} time domain resources. However, it should be noted that data carried in the message sent by the secondary node 5 to the secondary node 6, the secondary node 7, and the secondary node 8 on the 1^{st} time domain resource in the first transmission opportunity may be the same as or different from data carried in the message sent by the secondary node 5 to the secondary node 6, the secondary node 7, and the secondary node 8 on the 1^{st} time domain resource in the second transmission opportunity.

In FIG. 11, both 2^{nd} time domain resources in the first transmission opportunity and the second transmission opportunity are used by the secondary node 6 to send messages to the secondary node 5, the secondary node 7, and the secondary node 8, and the secondary node 5, the secondary node 7, and the secondary node 8 receive the messages from the secondary node 6 on the 2^{nd} time domain resources. However, it should be noted that data carried in the message sent by the secondary node 6 to the secondary node 5, the secondary node 7, and the secondary node 8 on the 2^{nd} time domain resource in the first transmission opportunity may be the same as or different from data carried in the message sent by the secondary node 6 to the secondary node 5, the secondary node 7, and the secondary node 8 on the 2^{nd} time domain resource in the second transmission opportunity.

In FIG. 11, both 3^{rd} time domain resources in the first transmission opportunity and the second transmission opportunity are used by the secondary node 7 to send messages to the secondary node 5, the secondary node 6, and the secondary node 8, and the secondary node 5, the secondary node 6, and the secondary node 8 receive the messages from the secondary node 7 on the 3^{rd} time domain resources. However, it should be noted that data carried in the message sent by the secondary node 7 to the secondary node 5, the secondary node 6, and the secondary node 8 on the 3^{rd} time domain resource in the first transmission opportunity may be the same as or different from data carried in the message sent by the secondary node 7 to the secondary node 5, the secondary node 6, and the secondary node 8 on the 3^{rd} time domain resource in the second transmission opportunity.

In FIG. 11, both 4^{th} time domain resources in the first transmission opportunity and the second transmission opportunity are used by the secondary node 8 to send messages to the secondary node 5, the secondary node 6, and the secondary node 7, and the secondary node 5, the secondary node 6, and the secondary node 7 receive the messages from the secondary node 8 on the 4^{th} time domain resources. However, it should be noted that data carried in the message sent by the secondary node 8 to the secondary node 5, the secondary node 6, and the secondary node 7 on the 4^{th} time domain resource in the first transmission opportunity may be the same as or different from data carried in the message sent by the secondary node 8 to the secondary node 5, the secondary node 6, and the secondary node 7 on the 4^{th} time domain resource in the second transmission opportunity.

Based on the descriptions of FIG. 11, the message sent by the secondary node 5 to the secondary node 6, the secondary node 7, and the secondary node 8 on the 1^{st} time domain resource in the first transmission opportunity includes the following feedback information: feedback information for the messages received by the secondary node 5 on the 1^{st} time domain resource, the 2^{nd} time domain resource, and the 3^{rd} time domain resource in the second transmission opportunity.

In addition, the message sent by the secondary node 6 to the secondary node 5, the secondary node 7, and the secondary node 8 on the 2^{nd} time domain resource in the first transmission opportunity includes the following feedback information: feedback information for the messages received by the secondary node 6 on the 3^{rd} time domain resource and the 4^{th} time domain resource in the second transmission opportunity, and feedback information for the message received by the secondary node 6 on the 1^{st} time domain resource in the first transmission opportunity.

In addition, the message sent by the secondary node 7 to the secondary node 5, the secondary node 6, and the secondary node 8 on the 3^{rd} time domain resource in the first transmission opportunity includes the following feedback information: feedback information for the messages received by the secondary node 6 on the 4^{th} time domain resource in the second transmission opportunity, and feedback information for the messages received by the secondary node 7 on the 1^{st} time domain resource and the 2^{nd} time domain resource in the first transmission opportunity.

In addition, the message sent by the secondary node 8 to the secondary node 5, the secondary node 6, and the secondary node 7 on the 4^{th} time domain resource in the first transmission opportunity includes the following feedback information: feedback information for the messages received by the secondary node 7 on the 1^{st} time domain resource, the 2^{nd} time domain resource, and the 3^{rd} time domain resource in the first transmission opportunity.

It should be noted that, in the foregoing manner of sending the feedback information, feedback information for a message may be conveniently sent to a peer node, to reduce a quantity of sending times. However, the manner of sending the feedback message in this application is not limited to the foregoing manner.

In a possible implementation, feedback information in a message sent by a node is carried in the message in a form of a bitmap (bitmap). The bitmap may include a plurality of pieces of bit information. One piece of bit information is one piece of feedback information, and each piece of bit information corresponds to one time domain resource used by the node to receive the message. The following separately describes the feedback information in the foregoing three cases by using examples.

In Case 1 and Case 2, in the second transmission opportunity and the first transmission opportunity, it is assumed that the second transmission opportunity and the first transmission opportunity each include only the M first time domain resources and the N second time domain resources successively. Messages sent by the first node on one or more resources in the M first time domain resources in the first transmission opportunity all include same feedback information. The feedback information includes an N-bit bitmap. Bits in the bitmap are in a one-to-one correspondence with the N second time domain resources in the second transmission opportunity, because the first node receives the message on the N second time domain resources. In addition, for the second node that communicates with the first node, messages sent by the second node on one or more of the N second time domain resources in the first transmission opportunity include same feedback information. The feedback information includes an M-bit bitmap. Bits in the bitmap are in a one-to-one correspondence with the M second time domain resources in the first transmission opportunity, because the second node receives a message on the M second time domain resources.

In Case 3, for example, the second transmission opportunity and the first transmission opportunity each successively include K second time domain resources, M first time domain resources, and the N second time domain resources. It is assumed that the first node and each of the Q nodes communicate with all other nodes. In this case, bitmaps of feedback information for messages sent by the first node and the Q nodes are similar. The following uses the first node as an example for description. Messages sent by the first node on one or more resources in the M first time domain resources in the first transmission opportunity all include same feedback information. The feedback information includes an (N+K)-bit bitmap. Bits in the bitmap are in a one-to-one correspondence with the N second time domain resources in the second transmission opportunity and the K second time domain resources in the first transmission opportunity, because the first node receives a message on the N+K second time domain resources.

The feedback information in the message is represented above in the form of the bitmap. This is simple and is easy in implementation, thereby saving resources.

In a possible implementation, in Case 2 and Case 3, on a 1^{st} time domain resource in each transmission opportunity, the primary node may send an indication message to each of a plurality of secondary nodes that send messages in the transmission opportunity. The indication message indicates that the plurality of nodes may send the messages and receive messages in the transmission opportunity. For example, refer to FIG. 6. A third time domain resource on the 1^{st} time domain resource may be used by the primary node to send the indication message to a node that performs communication in the first transmission opportunity.

For example, for the first transmission opportunity, the primary node may send the indication message to each of the first node and the Q nodes before the first transmission opportunity is used. The first node receives the indication message, and starts, based on the indication message, to send a message to each of the Q nodes on the at least one of the M first time domain resources in the first transmission opportunity. After receiving the indication message, the Q nodes start to receive the message from the first node on the at least one of the M first time domain resources in the first transmission opportunity.

Alternatively, in another possible implementation, for a plurality of consecutive transmission opportunities, before the plurality of consecutive transmission opportunities are for transmitting a message, the primary node may send the indication message to a node that performs communication in the plurality of consecutive transmission opportunities, to indicate the node, that performs communication in the plurality of consecutive transmission opportunities, to send or receive a message on the plurality of consecutive transmission opportunities.

For example, it is assumed that the second transmission opportunity and the first transmission opportunity are consecutive transmission opportunities. The primary node may send the indication message to each of the first node and the Q nodes before the second transmission opportunity is used. The first node receives the indication message, and starts, based on the indication message, to send a message to each of the Q nodes on at least one of the M first time domain resources in the second transmission opportunity. After receiving the indication message, the Q nodes start to receive the message from the first node on the at least one of the M first time domain resources in the second transmission opportunity. After using up the time domain resources in the second transmission opportunity, the first node and the Q nodes start to transmit a message by using the time domain resource in the first transmission opportunity, and the primary node does not need to send the indication message to each of the first node and the Q nodes again.

Optionally, only one indication message may be sent, or a plurality of indication messages may be sent successively.

In the foregoing implementation, the indication message sent by the primary node may provide a synchronization reference for a secondary node that performs transmission in the transmission opportunity, and is used as an acknowledgment signal indicating that the corresponding transmission opportunity is available. When the secondary node does not detect the indication message sent by the primary node, the secondary node does not use a resource in the corresponding transmission opportunity. In this way, the primary node allocates the resource more flexibly and dynamically.

The foregoing mainly describes the communication method provided in embodiments of this application. It may be understood that, to implement the foregoing corresponding functions, each device includes corresponding hardware structures and/or software modules for performing the corresponding functions. Units and steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of embodiments of this application.

In embodiments of this application, each device may be divided into functional modules based on the foregoing method examples, for example, each functional module may be obtained through division based on each corresponding function, or two or more functions may be integrated into one module. The integrated module may be implemented in a form of hardware, or may be implemented in a form of a software functional module. It should be noted that, in embodiments of this application, division into the modules is an example, is merely logical function division, and may be other division during actual implementation.

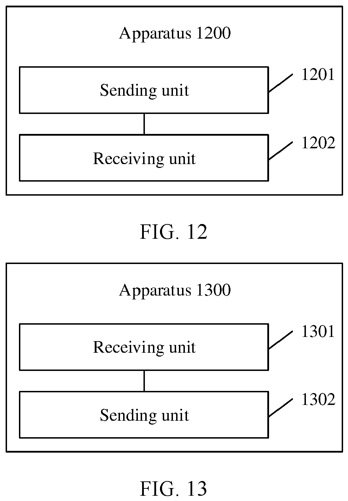

When each functional module is obtained through division based on each corresponding function, FIG. 12 is a schematic diagram of a possible logical structure of an apparatus. The apparatus may be the first node, or may be a chip in the first node, or may be a processing system in the first node, or the like. The apparatus 1200 includes a sending unit 1201 and a receiving unit 1202.

The sending unit 1201 is configured to send a message on at least one of M first time domain resources. The sending unit 1201 may be configured to implement a sending operation in step 401 in FIG. 4.

The receiving unit 1202 is configured to receive a message on at least one of N second time domain resources. The receiving unit 1202 may be configured to implement a receiving operation in step 404 in FIG. 4.

The first time domain resource is used by the first node to send a message. The second time domain resource is used by the first node to receive a message. The M first time domain resources and the N second time domain resources belong to a first transmission opportunity. A time domain resource in the first transmission opportunity is for message transmission on a first frequency hopping channel. M is an integer greater than 0, N is an integer greater than 0, and M+N>2.

In a possible implementation, the first transmission opportunity successively includes the M first time domain resources and the N second time domain resources.

In a possible implementation, the first transmission opportunity further includes K second time domain resources, and K is an integer greater than 0.

The receiving unit 1202 is further configured to: before the sending unit 1201 sends the message on the at least one of the M first time domain resources, receive a message on at least one of the K second time domain resources.

In a possible implementation, M is greater than 1, and the M first time domain resources are consecutive time domain resources in the first transmission opportunity. The sending unit 1201 is specifically configured to:
send messages on a plurality of first time domain resources.

In a possible implementation, N is greater than 1, and the N second time domain resources are consecutive time domain resources in the first transmission opportunity. The receiving unit 1202 is specifically configured to:
receive messages on a plurality of second time domain resources.

In a possible implementation, a node that communicates with the first node in the first transmission opportunity includes at least one node in a first node set.

The first node is a primary node, and the primary node is configured to manage a transmission resource for inter-node communication.

Alternatively, the first node is a node included in a second node set, and any node in the second node set is different from any node in the first node set.

Alternatively, the first node is a node in the first node set.

In a possible implementation, the first transmission opportunity further includes L third time domain resources, and L is an integer greater than 0.

If the first node is a primary node, the third time domain resource is used by a node in the first node set to send or receive a message.

Alternatively, if the first node is a node included in the second node set, the third time domain resource is used by a node in the first node set or a node other than the first node in the second node set to send or receive a message.

Alternatively, if the first node is a node in the first node set, the third time domain resource is used by a node other than the first node in the first node set to send or receive a message.

In a possible implementation, the first node further performs communication in a second transmission opportunity. A time domain resource in the second transmission opportunity is for message transmission on a second frequency hopping channel.

A resource pattern in the second transmission opportunity is the same as a resource pattern in the first transmission opportunity.

In a possible implementation, a message sent or received by the first node includes a first identifier. The first identifier indicates that data carried in the message in which the first identifier is located is new data or is the same as data sent or received on a resource corresponding to a predefined rule. In a possible implementation, the second transmission opportunity is used by the first node to transmit a message before the first node transmits a message in the first transmission opportunity. When a first identifier included in a message sent on a time domain resource in the first transmission opportunity is the same as a first identifier included in a message sent on a time domain resource, in the second transmission opportunity, at a same time domain position as the time domain resource in the first transmission opportunity, data carried in the message sent on the time domain resource at the same time domain position in the first transmission opportunity is retransmitted data.

When a first identifier included in a message sent on a time domain resource in the first transmission opportunity is different from a first identifier included in a message sent on a time domain resource, in the second transmission opportunity, at a same time domain position as the time domain resource in the first transmission opportunity, data carried in the message sent on the time domain resource at the same time domain position in the first transmission opportunity is new data.

In a possible implementation, the node that communicates with the first node in the first transmission opportunity includes the at least one node in the first node set. The first node is a primary node, and the primary node is configured to manage a transmission resource for inter-node communication. Alternatively, the first node is a node included in the second node set, and the any node in the second node set is different from the any node in the first node set.

The second transmission opportunity is used by the first node to transmit the message before the first node transmits the message in the first transmission opportunity.

A message sent by the first node in the first transmission opportunity includes feedback information. The feedback information is feedback information for a message received by the first node in the second transmission opportunity.

In a possible implementation, the first node is a node included in a second node set.

In the first transmission opportunity and the second transmission opportunity, a node in the second node set sends a message before a node in the first node set sends a message.

In a possible implementation, the node that communicates with the first node in the first transmission opportunity includes the at least one node in the first node set. The first node is a node in the first node set. The second transmission opportunity is used by the first node to transmit the message before the first node transmits the message in the first transmission opportunity.

A second message is a message sent by the first node on an m^{th} time domain resource in the first transmission opportunity. The second message includes feedback information for a message received by the first node on a time domain resource after an m^{th} time domain resource in the second transmission opportunity, and/or feedback information for a message received by the first node on a time domain resource before the m^{th} time domain resource in the first transmission opportunity, and m is an integer greater than 0.

In a possible implementation, the node that communicates with the first node in the first transmission opportunity includes the at least one node in the first node set. The first node is a node included in the second node set, and the any node in the second node set is different from the any node in the first node set. Alternatively, the first node is a node in the first node set.

The receiving unit 1202 is further configured to: before the sending unit 1201 sends the message on the at least one of the M first time domain resources, receive a third message from a primary node. The third message indicates the first node to send a message in the first transmission opportunity, and the primary node is configured to manage a transmission resource for inter-node communication.

In a possible implementation, the receiving unit 1202 is further configured to:
receive configuration signaling, where the configuration signaling indicates a time-frequency resource for sending and/or receiving a message by the first node in the first transmission opportunity, and/or indicates an identifier and/or a type of a transmission link for sending the message by the first node in the first transmission opportunity.

In a possible implementation, the node that communicates with the first node in the first transmission opportunity includes the at least one node in the first node set, the first node is a primary node, and the primary node is configured to manage a transmission resource for inter-node communication.

The sending unit 1201 is further configured to send configuration signaling to the at least one node in the first node set.

The configuration signaling indicates a time-frequency resource for sending and/or receiving a message by the at least one node in the first node set in the first transmission opportunity, and/or indicates an identifier and/or a type of a transmission link for sending the message by the at least one node in the first node set in the first transmission opportunity.

In a possible implementation, each message sent and/or received by the first node in the first transmission opportunity includes identification information of a transmission link for the message. In a possible implementation, each message sent and/or received by the first node in the first transmission opportunity successively includes a sequence part, a control information part, and a data part. The sequence part includes at least one preset sequence and/or a preset signal. The control information part includes one or more of an identifier of data, a length of the data part, a modulation and/or coding scheme of the data, and feedback information for the message. The data part includes the data or the data is empty.

For specific operations and beneficial effects of the units in the apparatus 1200 shown in FIG. 12, refer to the corresponding descriptions of FIG. 4 and the possible method embodiments of FIG. 4. Details are not described herein again.

When each functional module is obtained through division based on each corresponding function,

FIG. 13 is a schematic diagram of a possible logical structure of an apparatus. The apparatus may be any node in the Q nodes, or may be a chip in any node, or may be a processing system in any node, or the like. The apparatus 1300 includes a receiving unit 1301 and a sending unit 1302.

The receiving unit 1301 is configured to receive a message on at least one of M first time domain resources. The receiving unit 1301 may be configured to perform a receiving operation in step 402 in FIG. 4.

The sending unit 1302 is configured to send a message on at least one of N second time domain resources. The sending unit 1302 may be configured to perform a receiving operation in step 403 in FIG. 4.

The first time domain resource is used by the first node to receive a message. The second time domain resource is used by the first node to send a message. The M first time domain resources and the N second time domain resources belong to a first transmission opportunity. A time domain resource in the first transmission opportunity is for message transmission on a first frequency hopping channel. One time domain resource is for transmitting one message. M is an integer greater than 0, N is an integer greater than 0, and M+N>2.

In a possible implementation, the first transmission opportunity successively includes the M first time domain resources and the N second time domain resources.

In a possible implementation, the first transmission opportunity further includes K first time domain resources, and K is an integer greater than 0.

The receiving unit 1301 is further configured to: after the sending unit 1302 sends the message on the at least one of the N second time domain resources, receive, by the first node, a message on at least one of the K first time domain resources.

In a possible implementation, M is greater than 1, and the M first time domain resources are consecutive time domain resources in the first transmission opportunity. The receiving unit 1301 is specifically configured to:
receive messages on a plurality of first time domain resources.

In a possible implementation, N is greater than 1, and the N second time domain resources are consecutive time domain resources in the first transmission opportunity. The sending unit 1302 is specifically configured to:
send messages on a plurality of second time domain resources.

In a possible implementation, a node that communicates with the first node in the first transmission opportunity is a primary node, and the primary node is configured to manage a transmission resource for inter-node communication.

Alternatively, a node that communicates with the first node in the first transmission opportunity includes at least one node in a first node set. The first node is a node included in a second node set. Any node in the second node set is different from any node in the first node set.

Alternatively, a node that communicates with the first node in the first transmission opportunity includes at least one node in a first node set, and the first node is a node in the first node set.

In a possible implementation, the first transmission opportunity further includes L third time domain resources, and L is an integer greater than 0.

If the node that communicates with the first node in the first transmission opportunity is a primary node, the third time domain resource is used by a node other than the first node to send or receive a message.

Alternatively, if the first node is a node included in the second node set, the third time domain resource is used by a node in the first node set or a node other than the first node in the second node set to send or receive a message.

Alternatively, if the first node is a node in the first node set, the third time domain resource is used by a node other than the first node in the first node set to send or receive a message.

In a possible implementation, the first node further transmits a message in a second transmission opportunity. A time domain resource in the second transmission opportunity is for message transmission on a second frequency hopping channel.

A resource pattern in the second transmission opportunity is the same as a resource pattern in the first transmission opportunity.

In a possible implementation, a message sent or received by the first node includes a first identifier. The first identifier indicates that data carried in the message in which the first identifier is located is new data or is the same as data sent or received on a resource corresponding to a predefined rule. In a possible implementation, the second transmission opportunity is used by the first node to transmit a message before the first node transmits a message in the first transmission opportunity. When a first identifier included in a message sent on a time domain resource in the first transmission opportunity is the same as a first identifier included in a message sent on a time domain resource, in the second transmission opportunity, at a same time domain position as the time domain resource in the first transmission opportunity, data carried in the message sent on the time domain resource at the same time domain position in the first transmission opportunity is retransmitted data.

When a first identifier included in a message sent on a time domain resource in the first transmission opportunity is different from a first identifier included in a message sent on a time domain resource, in the second transmission opportunity, at a same time domain position as the time domain resource in the first transmission opportunity, data carried in the message sent on the time domain resource at the same time domain position in the first transmission opportunity is new data.

In a possible implementation, the node that communicates with the first node in the first transmission opportunity is a primary node, and the primary node is configured to manage a transmission resource for inter-node communication. Alternatively, the node that communicates with the first node in the first transmission opportunity includes the at least one node in the first node set. The first node is a node included in the second node set. The any node in the second node set is different from the any node in the first node set.

A message sent by the first node in the first transmission opportunity includes feedback information. The feedback information is feedback information for a message received by the first node in the first transmission opportunity.

In a possible implementation, the node that communicates with the first node in the first transmission opportunity includes the at least one node in the first node set. The first node is a node included in the second node set. The any node in the second node set is different from the any node in the first node set.

In the first transmission opportunity and the second transmission opportunity, the node in the first node set sends a message before the node in the second node set.

In a possible implementation, the node that communicates with the first node in the first transmission opportunity includes the at least one node in the first node set. The first node is a node in the first node set. The second transmission opportunity is used by the first node to transmit the message before the first node transmits the message in the first transmission opportunity.

A second message is a message received by the first node on an m^{th} time domain resource in the first transmission opportunity, and m is an integer greater than 0. The second message includes feedback information for a message received by the first node on a time domain resource after an m^{th} time domain resource in the second transmission opportunity, and/or feedback information for a message received by the first node on a time domain resource before the m^{th} time domain resource in the first transmission opportunity.

In a possible implementation, the node that communicates with the first node in the first transmission opportunity includes the at least one node in the first node set. The first node is a node included in the second node set, and the any node in the second node set is different from the any node in the first node set. Alternatively, the first node is a node in the first node set.

The receiving unit 1301 is further configured to: before the receiving unit 1301 receives the message on the at least one of the M first time domain resources, receive a third message from a primary node. The third message indicates the first node to send a message in the first transmission opportunity, and the primary node is configured to manage a transmission resource for inter-node communication.

In a possible implementation, the receiving unit 1301 is further configured to:
receive configuration signaling, where the configuration signaling indicates a time-frequency resource for sending and/or receiving a message by the first node in the first transmission opportunity, and/or indicates an identifier and/or a type of a transmission link for sending the message by the first node in the first transmission opportunity.

In a possible implementation, each message sent and/or received by the first node in the first transmission opportunity includes identification information of a transmission link for the message. In a possible implementation, each message sent and/or received by the first node in the first transmission opportunity successively includes a sequence part, a control information part, and a data part. The sequence part includes at least one preset sequence and/or a preset signal. The control information part includes one or more of an identifier of data, a length of the data part, a modulation and/or coding scheme of the data, and feedback information for the message. The data part includes the data or the data is empty.

For specific operations and beneficial effects of the units in the apparatus 1300 shown in FIG. 13, refer to the corresponding descriptions of FIG. 4 and the possible method embodiments of FIG. 4. Details are not described herein again.

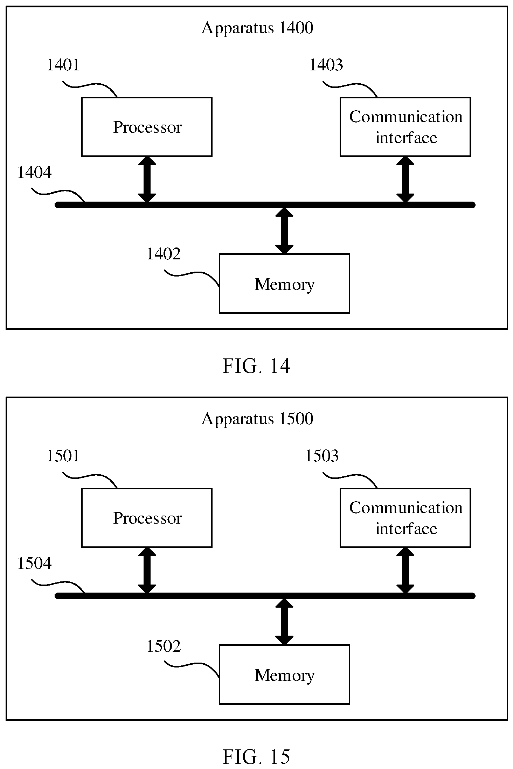

FIG. 14 is a schematic diagram of a possible hardware structure of an apparatus according to an embodiment of this application. The apparatus may be the first node in the foregoing embodiments, or may be a chip in the first node, or may be a processing system in the first node, or the like. The apparatus 1400 includes a processor 1401, a memory 1402, and a communication interface 1403. The processor 1401, the communication interface 1403, and the memory 1402 may be connected to each other, or may be connected to each other through a bus 1404.

For example, the memory 1402 is configured to store a computer program and data of the apparatus 1400. The memory 1402 may include but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM).

The communication interface 1403 includes a sending interface and a receiving interface. There may be a plurality of communication interfaces 1403, configured to support the apparatus 1400 in performing communication, for example, receiving or sending data or a message.

For example, the processor 1401 may be a central processing unit, a general-purpose processor, a digital signal processor, an application-specific integrated circuit, a field programmable gate array or another programmable logic device, a transistor logic device, a hardware component, or any combination thereof. The processor may alternatively be a combination implementing a computing function, for example, a combination including one or more microprocessors, or a combination of a digital signal processor and a microprocessor. The processor 1401 may be configured to read the program stored in the memory 1402, to enable the apparatus 1400 to perform the operations performed by the first node in any communication method described in FIG. 4 and the possible embodiments of FIG. 4.

In a possible implementation, the processor 1401 may be configured to read the program stored in the memory 1402, to perform the following operations: sending a message on at least one of M first time domain resources through the sending interface; and receiving a message on at least one of N second time domain resources through the receiving interface, where the first time domain resource is used by the first node to send a message; the second time domain resource is used by the first node to receive a message; the M first time domain resources and the N second time domain resources belong to a first transmission opportunity; a time domain resource in the first transmission opportunity is for message transmission on a first frequency hopping channel; and M is an integer greater than 0, N is an integer greater than 0, and M+N>2.

For specific operations and beneficial effects of the units in the apparatus 1400 shown in FIG. 14, refer to the corresponding descriptions of FIG. 4 and the possible method embodiments of FIG. 4. Details are not described herein again.

FIG. 15 is a schematic diagram of a possible hardware structure of an apparatus according to an embodiment of this application. The apparatus may be any node in the Q nodes in the foregoing embodiments, or may be a chip in any node, or may be a processing system in any node, or the like. The apparatus 1500 includes a processor 1501, a memory 1502, and a communication interface 1503. The processor 1501, the communication interface 1503, and the memory 1502 may be connected to each other, or may be connected to each other through a bus 1504.

For example, the memory 1502 is configured to store a computer program and data of the apparatus 1500. The memory 1502 may include but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM).

The communication interface 1503 includes a sending interface and a receiving interface. There may be a plurality of communication interfaces 1503, configured to support the apparatus 1500 in performing communication, for example, receiving or sending data or a message.

For example, the processor 1501 may be a central processing unit, a general-purpose processor, a digital signal processor, an application-specific integrated circuit, a field programmable gate array or another programmable logic device, a transistor logic device, a hardware component, or any combination thereof. The processor may alternatively be a combination implementing a computing function, for example, a combination including one or more microprocessors, or a combination of a digital signal processor and a microprocessor. The processor 1501 may be configured to read the program stored in the memory 1502, to enable the apparatus 1500 to perform the operations performed by the any node in the Q nodes in any communication method described in FIG. 4 and the possible embodiments of FIG. 4.

In a possible implementation, the processor 1501 may be configured to read the program stored in the memory 1502, to perform the following operations: receiving a message on at least one of M first time domain resources through the receiving interface; and sending a message on at least one of N second time domain resources through the sending interface, where the first time domain resource is used by the first node to receive a message; the second time domain resource is used by the first node to send a message; the M first time domain resources and the N second time domain resources belong to a first transmission opportunity; a time domain resource in the first transmission opportunity is for message transmission on a first frequency hopping channel; one time domain resource is for transmitting one message; and M is an integer greater than 0, N is an integer greater than 0, and M+N>2.

For specific operations and beneficial effects of the units in the apparatus 1500 shown in FIG. 15, refer to the corresponding descriptions of FIG. 4 and the possible method embodiments of FIG. 4. Details are not described herein again.

An embodiment of this application further provides a terminal. The terminal includes the first node described in any embodiment of FIG. 4 and the possible method embodiments of FIG. 4. Alternatively, the terminal includes any one of the Q nodes in any one of FIG. 4 and the possible method embodiments of FIG. 4. Optionally, the terminal may be a vehicle, or may be a vehicle-mounted device, or the like.

An embodiment of this application further provides a computer-readable storage medium. The computer-readable storage medium stores a computer program. The computer program is executed by a processor to implement the operations performed by the first node in the method in any one of FIG. 4 and the possible method embodiments of FIG. 4.

An embodiment of this application further provides a computer-readable storage medium. The computer-readable storage medium stores a computer program. The computer program is executed by a processor to implement operations performed by any one of the Q nodes in the method in any one of FIG. 4 and the possible method embodiments of FIG. 4.

An embodiment of this application further provides a computer program product. When the computer program product is read and executed by a computer, the operations performed by the first node in the method in any one of FIG. 4 and the possible method embodiments of FIG. 4 are performed.

An embodiment of this application further provides a computer program product. When the computer program product is read and executed by a computer, operations performed by any one of the Q nodes in the method in any one of FIG. 4 and the possible method embodiments of FIG. 4 are performed.

In conclusion, the communication method provided in this application can be applied to a communication domain. The communication domain includes one primary node and at least one secondary node. A node is a communication apparatus. In an existing solution, the primary node can send only one message to one secondary node each time. After receiving the message from the primary node, the secondary node can also send only one message to the primary node. If a plurality of messages need to be sent through interaction or interaction between a plurality of nodes is required, the primary node and the secondary node need to frequently switch a receiving and sending relationship, resulting in large overheads of a resource, for example, a time-frequency resource. However, in this application, a node can send a plurality of messages to one or more nodes in one transmission opportunity. Alternatively, a node can simultaneously send messages to a plurality of nodes. This reduces a quantity of times of receiving and sending switching, reduces overheads of the resource, for example, the time-frequency resource, and improves communication efficiency.

In this application, the terms "first", "second", and the like are for distinguishing between same or similar items whose effects and functions are basically the same. It should be understood that there is no logical or time-sequence dependency between "first", "second", and "n^{th}", and a quantity and an execution sequence are not limited either. It should also be understood that although the terms such as "first" and "second" are used in the following descriptions to describe various elements, these elements should not be limited by the terms. These terms are merely for distinguishing one element from another element. For example, the first node may be referred to as the second node and similarly, the second node may be referred to as the first node, without departing from the scope of the various examples. Both the first node and the second node may be nodes, and in some cases, may be separate and different nodes.

It should be further understood that sequence numbers of the processes do not mean execution sequences in various embodiments of this application. The execution sequences of the processes should be determined based on functions and internal logic of the processes, and should not be construed as any limitation on the implementation processes of embodiments of this application. It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should be further understood that "one embodiment", "an embodiment", or "a possible implementation" mentioned throughout this specification means that particular features, structures, or characteristics related to embodiments or implementations are included in at least one of embodiments of this application. Therefore, "in one embodiment", "in an embodiment", or "in a possible implementation" appearing throughout this specification does not necessarily mean a same embodiment. In addition, these particular features, structures, or characteristics may be combined in one or more embodiments in any appropriate manner.

Finally, it should be noted that the foregoing embodiments are merely intended for describing the technical solutions in embodiments of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A communication method, wherein the method comprises:
sending, by a first node, a message on at least one of M first time domain resources; and
receiving, by the first node, a message on at least one of N second time domain resources, wherein
the first time domain resource is used by the first node to send a message;
the second time domain resource is used by the first node to receive a message; and
the M first time domain resources and the N second time domain resources belong to a first transmission opportunity; a time domain resource in the first transmission opportunity is for message transmission on a first frequency hopping channel; and M is an integer greater than 0, N is an integer greater than 0, and M+N>2.

2. The method according to claim 1, wherein the first transmission opportunity successively comprises the M first time domain resources and the N second time domain resources.

3. The method according to claim 1 or 2, wherein the first transmission opportunity further comprises K second time domain resources, and K is an integer greater than 0; and
before the sending, by a first node, a message on at least one of M first time domain resources, the method further comprises:
receiving, by the first node, a message on at least one of the K second time domain resources.

4. The method according to any one of claims 1 to 3, wherein M is greater than 1, and the M first time domain resources are consecutive time domain resources in the first transmission opportunity; and
the sending, by a first node, a message on at least one of M first time domain resources comprises: sending, by the first node, messages on a plurality of first time domain resources.

5. The method according to any one of claims 1 to 4, wherein N is greater than 1, and the N second time domain resources are consecutive time domain resources in the first transmission opportunity; and
the receiving, by the first node, a message on at least one of N second time domain resources comprises: receiving, by the first node, messages on a plurality of second time domain resources.

6. The method according to any one of claims 1 to 5, wherein a node that communicates with the first node in the first transmission opportunity comprises at least one node in a first node set; and
the first node is a primary node, and the primary node is configured to manage a transmission resource for inter-node communication; or
the first node is a node comprised in a second node set, and any node in the second node set is different from any node in the first node set; or
the first node is a node in the first node set.

7. The method according to claim 6, wherein the first transmission opportunity further comprises L third time domain resources, and L is an integer greater than 0; and
if the first node is a primary node, the third time domain resource is used by a node in the first node set to send or receive a message; or
if the first node is a node comprised in the second node set, the third time domain resource is used by a node in the first node set or a node other than the first node in the second node set to send or receive a message; or
if the first node is a node in the first node set, the third time domain resource is used by a node other than the first node in the first node set to send or receive a message.

8. The method according to any one of claims 1 to 7, wherein the first node further performs communication in a second transmission opportunity, and a time domain resource in the second transmission opportunity is for message transmission on a second frequency hopping channel; and
a resource pattern in the second transmission opportunity is the same as a resource pattern in the first transmission opportunity.

9. The method according to claim 8, wherein a message sent or received by the first node comprises a first identifier, and the first identifier indicates that data carried in the message in which the first identifier is located is new data or is the same as data sent or received on a resource corresponding to a predefined rule.

10. The method according to claim 9, wherein the second transmission opportunity is used by the first node to transmit a message before the first node transmits a message in the first transmission opportunity; and
when a first identifier comprised in a message sent on a time domain resource in the first transmission opportunity is the same as a first identifier comprised in a message sent on a time domain resource, in the second transmission opportunity, at a same time domain position as the time domain resource in the first transmission opportunity, data carried in the message sent on the time domain resource at the same time domain position in the first transmission opportunity is retransmitted data; or
when a first identifier comprised in a message sent on a time domain resource in the first transmission opportunity is different from a first identifier comprised in a message sent on a time domain resource, in the second transmission opportunity, at a same time domain position as the time domain resource in the first transmission opportunity, data carried in the message sent on the time domain resource at the same time domain position in the first transmission opportunity is new data.

11. The method according to any one of claims 8 to 10, wherein the node that communicates with the first node in the first transmission opportunity comprises the at least one node in the first node set; and the first node is a primary node, and the primary node is configured to manage a transmission resource for inter-node communication; or the first node is a node comprised in the second node set, and the any node in the second node set is different from the any node in the first node set;
the second transmission opportunity is used by the first node to transmit the message before the first node transmits the message in the first transmission opportunity; and
a message sent by the first node in the first transmission opportunity comprises feedback information, and the feedback information is feedback information for a message received by the first node in the second transmission opportunity.

12. The method according to claim 11, wherein the first node is a node comprised in the second node set; and
in the first transmission opportunity and the second transmission opportunity, a node in the second node set sends a message before a node in the first node set sends a message.

13. The method according to any one of claims 8 to 10, wherein the node that communicates with the first node in the first transmission opportunity comprises the at least one node in the first node set; the first node is a node in the first node set; and the second transmission opportunity is used by the first node to transmit the message before the first node transmits the message in the first transmission opportunity; and
a second message is a message sent by the first node on an m^{th} time domain resource in the first transmission opportunity; and the second message comprises feedback information for a message received by the first node on a time domain resource after an m^{th} time domain resource in the second transmission opportunity, and/or feedback information for a message received by the first node on a time domain resource before the m^{th} time domain resource in the first transmission opportunity, and m is an integer greater than 0.

14. The method according to any one of claims 1 to 13, wherein the node that communicates with the first node in the first transmission opportunity comprises the at least one node in the first node set; and the first node is a node comprised in the second node set, and the any node in the second node set is different from the any node in the first node set; or the first node is a node in the first node set; and
before the sending, by a first node, a message on at least one of M first time domain resources, the method further comprises:
receiving, by the first node, a third message from a primary node, wherein the third message indicates the first node to send a message in the first transmission opportunity, and the primary node is configured to manage a transmission resource for inter-node communication.

15. The method according to claim 14, wherein the method further comprises:
receiving, by the first node, configuration signaling, wherein the configuration signaling indicates a time-frequency resource for sending and/or receiving a message by the first node in the first transmission opportunity, and/or indicates an identifier and/or a type of a link for sending the message by the first node in the first transmission opportunity.

16. The method according to any one of claims 1 to 11, wherein the node that communicates with the first node in the first transmission opportunity comprises the at least one node in the first node set, the first node is a primary node, and the primary node is configured to manage a transmission resource for inter-node communication; and the method further comprises:
sending, by the first node, configuration signaling to the at least one node in the first node set, wherein
the configuration signaling indicates a time-frequency resource for sending and/or receiving a message by the at least one node in the first node set in the first transmission opportunity, and/or indicates an identifier and/or a type of a transmission link for sending the message by the at least one node in the first node set in the first transmission opportunity.

17. The method according to any one of claims 1 to 16, wherein each message sent and/or received by the first node in the first transmission opportunity comprises identification information of a transmission link for the message.

18. The method according to any one of claims 1 to 17, wherein each message sent and/or received by the first node in the first transmission opportunity successively comprises a sequence part, a control information part, and a data part, wherein the sequence part comprises at least one preset sequence and/or a preset signal, the control information part comprises one or more of an identifier of data, a length of the data part, a modulation and/or coding scheme of the data, and feedback information for the message, and the data part comprises the data or the data is empty.

19. A communication method, wherein the method comprises:
receiving, by a first node, a message on at least one of M first time domain resources; and
sending, by the first node, a message on at least one of N second time domain resources, wherein
the first time domain resource is used by the first node to receive a message;
the second time domain resource is used by the first node to send a message; and
the M first time domain resources and the N second time domain resources belong to a first transmission opportunity; a time domain resource in the first transmission opportunity is for message transmission on a first frequency hopping channel; one time domain resource is for transmitting one message; and M is an integer greater than 0, N is an integer greater than 0, and M+N>2.

20. The method according to claim 19, wherein the first transmission opportunity successively comprises the M first time domain resources and the N second time domain resources.

21. The method according to claim 19 or 20, wherein the first transmission opportunity further comprises K first time domain resources, and K is an integer greater than 0; and
after the sending, by the first node, a message on at least one of N second time domain resources, the method further comprises:
receiving, by the first node, a message on at least one of the K first time domain resources.

22. The method according to any one of claims 19 to 21, wherein M is greater than 1, and the M first time domain resources are consecutive time domain resources in the first transmission opportunity; and
the receiving, by a first node, a message on at least one of M first time domain resources comprises: receiving, by the first node, messages on a plurality of first time domain resources.

23. The method according to any one of claims 19 to 22, wherein N is greater than 1, and the N second time domain resources are consecutive time domain resources in the first transmission opportunity; and
the sending, by the first node, a message on at least one of N second time domain resources comprises: sending, by the first node, messages on a plurality of second time domain resources.

24. The method according to any one of claims 19 to 23, wherein
a node that communicates with the first node in the first transmission opportunity is a primary node, and the primary node is configured to manage a transmission resource for inter-node communication; or
a node that communicates with the first node in the first transmission opportunity comprises at least one node in a first node set, the first node is a node comprised in a second node set, and any node in the second node set is different from any node in the first node set; or
a node that communicates with the first node in the first transmission opportunity comprises at least one node in a first node set, and the first node is a node in the first node set.

25. The method according to claim 24, wherein the first transmission opportunity further comprises L third time domain resources, and L is an integer greater than 0; and
if the node that communicates with the first node in the first transmission opportunity is a primary node, the third time domain resource is used by a node other than the first node to send or receive a message; or
if the first node is a node comprised in the second node set, the third time domain resource is used by a node in the first node set or a node other than the first node in the second node set to send or receive a message; or
if the first node is a node in the first node set, the third time domain resource is used by a node other than the first node in the first node set to send or receive a message.

26. The method according to any one of claims 19 to 25, wherein the first node further transmits a message in a second transmission opportunity, and a time domain resource in the second transmission opportunity is for message transmission on a second frequency hopping channel; and
a resource pattern in the second transmission opportunity is the same as a resource pattern in the first transmission opportunity.

27. The method according to claim 26, wherein a message sent or received by the first node comprises a first identifier, and the first identifier indicates that data carried in the message in which the first identifier is located is new data or is the same as data sent or received on a resource corresponding to a predefined rule.

28. The method according to claim 27, wherein the second transmission opportunity is used by the first node to transmit a message before the first node transmits a message in the first transmission opportunity; and
when a first identifier comprised in a message sent on a time domain resource in the first transmission opportunity is the same as a first identifier comprised in a message sent on a time domain resource, in the second transmission opportunity, at a same time domain position as the time domain resource in the first transmission opportunity, data carried in the message sent on the time domain resource at the same time domain position in the first transmission opportunity is retransmitted data; or
when a first identifier comprised in a message sent on a time domain resource in the first transmission opportunity is different from a first identifier comprised in a message sent on a time domain resource, in the second transmission opportunity, at a same time domain position as the time domain resource in the first transmission opportunity, data carried in the message sent on the time domain resource at the same time domain position in the first transmission opportunity is new data.

29. The method according to any one of claims 26 to 28, wherein the node that communicates with the first node in the first transmission opportunity is a primary node, and the primary node is configured to manage a transmission resource for inter-node communication; or the node that communicates with the first node in the first transmission opportunity comprises the at least one node in the first node set, the first node is a node comprised in the second node set, and the any node in the second node set is different from the any node in the first node set; and
a message sent by the first node in the first transmission opportunity comprises feedback information, and the feedback information is feedback information for a message received by the first node in the first transmission opportunity.

30. The method according to claim 29, wherein the node that communicates with the first node in the first transmission opportunity comprises the at least one node in the first node set, the first node is a node comprised in the second node set, and the any node in the second node set is different from the any node in the first node set; and
in the first transmission opportunity and the second transmission opportunity, a node in the first node set sends a message before a node in the second node set sends a message.

31. The method according to any one of claims 26 to 28, wherein the node that communicates with the first node in the first transmission opportunity comprises the at least one node in the first node set; the first node is a node in the first node set; and the second transmission opportunity is used by the first node to transmit the message before the first node transmits the message in the first transmission opportunity; and
a second message is a message received by the first node on an m^{th} time domain resource in the first transmission opportunity, and m is an integer greater than 0; and the second message comprises feedback information for a message received by the first node on a time domain resource after an m^{th} time domain resource in the second transmission opportunity, and/or feedback information for a message received by the first node on a time domain resource before the m^{th} time domain resource in the first transmission opportunity.

32. The method according to any one of claims 19 to 31, wherein the node that communicates with the first node in the first transmission opportunity comprises the at least one node in the first node set; and the first node is a node comprised in the second node set, and the any node in the second node set is different from the any node in the first node set; or the first node is a node in the first node set; and
before the receiving, by a first node, a message on at least one of M first time domain resources, the method further comprises:
receiving, by the first node, a third message from a primary node, wherein the third message indicates the first node to send a message in the first transmission opportunity, and the primary node is configured to manage a transmission resource for inter-node communication.

33. The method according to claims 19 to 32, wherein the method further comprises:
receiving, by the first node, configuration signaling, wherein the configuration signaling indicates a time-frequency resource for sending and/or receiving a message by the first node in the first transmission opportunity, and/or indicates an identifier and/or a type of a transmission link for sending the message by the first node in the first transmission opportunity.

34. The method according to any one of claims 19 to 33, wherein each message sent and/or received by the first node in the first transmission opportunity comprises identification information of a transmission link for the message.

35. The method according to any one of claims 19 to 34, wherein each message sent and/or received by the first node in the first transmission opportunity successively comprises a sequence part, a control information part, and a data part, wherein the sequence part comprises at least one preset sequence and/or a preset signal, the control information part comprises one or more of an identifier of data, a length of the data part, a modulation and/or coding scheme of the data, and feedback information for the message, and the data part comprises the data or the data is empty.

36. A communication apparatus, wherein the apparatus comprises:
a sending unit, configured to send a message on at least one of M first time domain resources; and
a receiving unit, configured to receive a message on at least one of N second time domain resources, wherein
the first time domain resource is used by the first node to send a message;
the second time domain resource is used by the first node to receive a message; and
the M first time domain resources and the N second time domain resources belong to a first transmission opportunity; a time domain resource in the first transmission opportunity is for message transmission on a first frequency hopping channel; and M is an integer greater than 0, N is an integer greater than 0, and M+N>2.

37. The apparatus according to claim 36, wherein the first transmission opportunity successively comprises the M first time domain resources and the N second time domain resources.

38. The apparatus according to claim 36 or 37, wherein the first transmission opportunity further comprises K second time domain resources, and K is an integer greater than 0; and
the receiving unit is further configured to: before the sending unit sends the message on the at least one of the M first time domain resources, receive a message on at least one of the K second time domain resources.

39. The apparatus according to any one of claims 36 to 38, wherein M is greater than 1, and the M first time domain resources are consecutive time domain resources in the first transmission opportunity; and the sending unit is specifically configured to:
send messages on a plurality of first time domain resources.

40. The apparatus according to any one of claims 36 to 39, wherein N is greater than 1, and the N second time domain resources are consecutive time domain resources in the first transmission opportunity; and the receiving unit is specifically configured to:
receive messages on a plurality of second time domain resources.

41. The apparatus according to any one of claims 36 to 40, wherein a node that communicates with the first node in the first transmission opportunity comprises at least one node in a first node set; and
the first node is a primary node, and the primary node is configured to manage a transmission resource for inter-node communication; or
the first node is a node comprised in a second node set, and any node in the second node set is different from any node in the first node set; or
the first node is a node in the first node set.

42. The apparatus according to claim 41, wherein the first transmission opportunity further comprises L third time domain resources, and L is an integer greater than 0; and
if the first node is a primary node, the third time domain resource is used by a node in the first node set to send or receive a message; or
if the first node is a node comprised in the second node set, the third time domain resource is used by a node in the first node set or a node other than the first node in the second node set to send or receive a message; or
if the first node is a node in the first node set, the third time domain resource is used by a node other than the first node in the first node set to send or receive a message.

43. The apparatus according to any one of claims 36 to 42, wherein the first node further performs communication in a second transmission opportunity, and a time domain resource in the second transmission opportunity is for message transmission on a second frequency hopping channel; and
a resource pattern in the second transmission opportunity is the same as a resource pattern in the first transmission opportunity.

44. The apparatus according to claim 43, wherein a message sent or received by the first node comprises a first identifier, and the first identifier indicates that data carried in the message in which the first identifier is located is new data or is the same as data sent or received on a resource corresponding to a predefined rule.

45. The apparatus according to claim 44, wherein the second transmission opportunity is used by the first node to transmit a message before the first node transmits a message in the first transmission opportunity; and
when a first identifier comprised in a message sent on a time domain resource in the first transmission opportunity is the same as a first identifier comprised in a message sent on a time domain resource, in the second transmission opportunity, at a same time domain position as the time domain resource in the first transmission opportunity, data carried in the message sent on the time domain resource at the same time domain position in the first transmission opportunity is retransmitted data; or
when a first identifier comprised in a message sent on a time domain resource in the first transmission opportunity is different from a first identifier comprised in a message sent on a time domain resource, in the second transmission opportunity, at a same time domain position as the time domain resource in the first transmission opportunity, data carried in the message sent on the time domain resource at the same time domain position in the first transmission opportunity is new data.

46. The apparatus according to any one of claims 43 to 45, wherein the node that communicates with the first node in the first transmission opportunity comprises the at least one node in the first node set; and the first node is a primary node, and the primary node is configured to manage a transmission resource for inter-node communication; or the first node is a node comprised in the second node set, and the any node in the second node set is different from the any node in the first node set;
the second transmission opportunity is used by the first node to transmit the message before the first node transmits the message in the first transmission opportunity; and
a message sent by the first node in the first transmission opportunity comprises feedback information, and the feedback information is feedback information for a message received by the first node in the second transmission opportunity.

47. The apparatus according to claim 46, wherein the first node is a node comprised in the second node set; and
in the first transmission opportunity and the second transmission opportunity, a node in the second node set sends a message before a node in the first node set sends a message.

48. The apparatus according to any one of claims 43 to 45, wherein the node that communicates with the first node in the first transmission opportunity comprises the at least one node in the first node set; the first node is a node in the first node set; and the second transmission opportunity is used by the first node to transmit the message before the first node transmits the message in the first transmission opportunity; and
a second message is a message sent by the first node on an m^{th} time domain resource in the first transmission opportunity; and the second message comprises feedback information for a message received by the first node on a time domain resource after an m^{th} time domain resource in the second transmission opportunity, and/or feedback information for a message received by the first node on a time domain resource before the m^{th} time domain resource in the first transmission opportunity, and m is an integer greater than 0.

49. The apparatus according to any one of claims 36 to 48, wherein the node that communicates with the first node in the first transmission opportunity comprises the at least one node in the first node set; and the first node is a node comprised in the second node set, and the any node in the second node set is different from the any node in the first node set; or the first node is a node in the first node set; and
the receiving unit is further configured to: before the sending unit sends the message on the at least one of the M first time domain resources, receive a third message from a primary node, wherein the third message indicates the first node to send a message in the first transmission opportunity, and the primary node is configured to manage a transmission resource for inter-node communication.

50. The apparatus according to claim 49, wherein the receiving unit is further configured to:
receive configuration signaling, wherein the configuration signaling indicates a time-frequency resource for sending and/or receiving a message by the first node in the first transmission opportunity, and/or indicates an identifier and/or a type of a link for sending the message by the first node in the first transmission opportunity.

51. The apparatus according to any one of claims 36 to 46, wherein the node that communicates with the first node in the first transmission opportunity comprises the at least one node in the first node set, the first node is a primary node, and the primary node is configured to manage a transmission resource for inter-node communication; and
the sending unit is further configured to send configuration signaling to the at least one node in the first node set, wherein
the configuration signaling indicates a time-frequency resource for sending and/or receiving a message by the at least one node in the first node set in the first transmission opportunity, and/or indicates an identifier and/or a type of a transmission link for sending the message by the at least one node in the first node set in the first transmission opportunity.

52. The apparatus according to any one of claims 36 to 51, wherein each message sent and/or received by the first node in the first transmission opportunity comprises identification information of a transmission link for the message.

53. The apparatus according to any one of claims 36 to 52, wherein each message sent and/or received by the first node in the first transmission opportunity successively comprises a sequence part, a control information part, and a data part, wherein the sequence part comprises at least one preset sequence and/or a preset signal, the control information part comprises one or more of an identifier of data, a length of the data part, a modulation and/or coding scheme of the data, and feedback information for the message, and the data part comprises the data or the data is empty.

54. A communication apparatus, wherein the apparatus comprises:
a receiving unit, configured to receive a message on at least one of M first time domain resources; and
a sending unit, configured to send a message on at least one of N second time domain resources, wherein
the first time domain resource is used by the first node to receive a message;
the second time domain resource is used by the first node to send a message; and
the M first time domain resources and the N second time domain resources belong to a first transmission opportunity; a time domain resource in the first transmission opportunity is for message transmission on a first frequency hopping channel; one time domain resource is for transmitting one message; and M is an integer greater than 0, N is an integer greater than 0, and M+N>2.

55. The apparatus according to claim 54, wherein the first transmission opportunity successively comprises the M first time domain resources and the N second time domain resources.

56. The apparatus according to claim 54 or 55, wherein the first transmission opportunity further comprises K first time domain resources, and K is an integer greater than 0; and
the receiving unit is further configured to: after the sending unit sends the message on the at least one of the N second time domain resources, receive, by the first node, a message on at least one of the K first time domain resources.

57. The apparatus according to any one of claims 54 to 56, wherein M is greater than 1, and the M first time domain resources are consecutive time domain resources in the first transmission opportunity; and the receiving unit is specifically configured to:
receive messages on a plurality of first time domain resources.

58. The apparatus according to any one of claims 54 to 57, wherein N is greater than 1, and the N second time domain resources are consecutive time domain resources in the first transmission opportunity; and the sending unit is specifically configured to:
send messages on a plurality of second time domain resources.

59. The apparatus according to any one of claims 54 to 58, wherein
a node that communicates with the first node in the first transmission opportunity is a primary node, and the primary node is configured to manage a transmission resource for inter-node communication; or
a node that communicates with the first node in the first transmission opportunity comprises at least one node in a first node set, the first node is a node comprised in a second node set, and any node in the second node set is different from any node in the first node set; or
a node that communicates with the first node in the first transmission opportunity comprises at least one node in a first node set, and the first node is a node in the first node set.

60. The apparatus according to claim 59, wherein the first transmission opportunity further comprises L third time domain resources, and L is an integer greater than 0; and
if the node that communicates with the first node in the first transmission opportunity is a primary node, the third time domain resource is used by a node other than the first node to send or receive a message; or
if the first node is a node comprised in the second node set, the third time domain resource is used by a node in the first node set or a node other than the first node in the second node set to send or receive a message; or
if the first node is a node in the first node set, the third time domain resource is used by a node other than the first node in the first node set to send or receive a message.

61. The apparatus according to any one of claims 54 to 60, wherein the first node further transmits a message in a second transmission opportunity, and a time domain resource in the second transmission opportunity is for message transmission on a second frequency hopping channel; and
a resource pattern in the second transmission opportunity is the same as a resource pattern in the first transmission opportunity.

62. The apparatus according to claim 61, wherein a message sent or received by the first node comprises a first identifier, and the first identifier indicates that data carried in the message in which the first identifier is located is new data or is the same as data sent or received on a resource corresponding to a predefined rule.

63. The apparatus according to claim 62, wherein the second transmission opportunity is used by the first node to transmit a message before the first node transmits a message in the first transmission opportunity; and
when a first identifier comprised in a message sent on a time domain resource in the first transmission opportunity is the same as a first identifier comprised in a message sent on a time domain resource, in the second transmission opportunity, at a same time domain position as the time domain resource in the first transmission opportunity, data carried in the message sent on the time domain resource at the same time domain position in the first transmission opportunity is retransmitted data; or
when a first identifier comprised in a message sent on a time domain resource in the first transmission opportunity is different from a first identifier comprised in a message sent on a time domain resource, in the second transmission opportunity, at a same time domain position as the time domain resource in the first transmission opportunity, data carried in the message sent on the time domain resource at the same time domain position in the first transmission opportunity is new data.

64. The apparatus according to any one of claims 61 to 63, wherein the node that communicates with the first node in the first transmission opportunity is a primary node, and the primary node is configured to manage a transmission resource for inter-node communication; or the node that communicates with the first node in the first transmission opportunity comprises the at least one node in the first node set, the first node is a node comprised in the second node set, and the any node in the second node set is different from the any node in the first node set; and
a message sent by the first node in the first transmission opportunity comprises feedback information, and the feedback information is feedback information for a message received by the first node in the first transmission opportunity.

65. The apparatus according to claim 64, wherein the node that communicates with the first node in the first transmission opportunity comprises the at least one node in the first node set, the first node is a node comprised in the second node set, and the any node in the second node set is different from the any node in the first node set; and
in the first transmission opportunity and the second transmission opportunity, a node in the first node set sends a message before a node in the second node set sends a message.

66. The apparatus according to any one of claims 61 to 63, wherein the node that communicates with the first node in the first transmission opportunity comprises the at least one node in the first node set; the first node is a node in the first node set; and the second transmission opportunity is used by the first node to transmit the message before the first node transmits the message in the first transmission opportunity; and
a second message is a message received by the first node on an m^{th} time domain resource in the first transmission opportunity, and m is an integer greater than 0; and the second message comprises feedback information for a message received by the first node on a time domain resource after an m^{th} time domain resource in the second transmission opportunity, and/or feedback information for a message received by the first node on a time domain resource before the m^{th} time domain resource in the first transmission opportunity.

67. The apparatus according to any one of claims 54 to 66, wherein the node that communicates with the first node in the first transmission opportunity comprises the at least one node in the first node set; and the first node is a node comprised in the second node set, and the any node in the second node set is different from the any node in the first node set; or the first node is a node in the first node set; and
the receiving unit is further configured to: before the receiving unit receives the message on the at least one of the M first time domain resources, receive a third message from a primary node, wherein the third message indicates the first node to send a message in the first transmission opportunity, and the primary node is configured to manage a transmission resource for inter-node communication.

68. The apparatus according to claims 54 to 67, wherein the receiving unit is further configured to:
receive configuration signaling, wherein the configuration signaling indicates a time-frequency resource for sending and/or receiving a message by the first node in the first transmission opportunity, and/or indicates an identifier and/or a type of a transmission link for sending the message by the first node in the first transmission opportunity.

69. The apparatus according to any one of claims 54 to 68, wherein each message sent and/or received by the first node in the first transmission opportunity comprises identification information of a transmission link for the message.

70. The apparatus according to any one of claims 54 to 69, wherein each message sent and/or received by the first node in the first transmission opportunity successively comprises a sequence part, a control information part, and a data part, wherein the sequence part comprises at least one preset sequence and/or a preset signal, the control information part comprises one or more of an identifier of data, a length of the data part, a modulation and/or coding scheme of the data, and feedback information for the message, and the data part comprises the data or the data is empty.

71. A communication apparatus, wherein the communication apparatus comprises a processor, a sending interface, a receiving interface, and a memory, wherein the memory is configured to store a computer program, and the processor is configured to execute the computer program stored in the memory, to enable the communication apparatus to perform the method according to any one of claims 1 to 18 through the sending interface and/or the receiving interface.

72. A communication apparatus, wherein the communication apparatus comprises a processor, a sending interface, a receiving interface, and a memory, wherein the memory is configured to store a computer program, and the processor is configured to execute the computer program stored in the memory, to enable the communication apparatus to perform the method according to any one of claims 19 to 35 through the sending interface and/or the receiving interface.

73. A communication system, wherein the communication system comprises a first node and a second node, the first node is the apparatus according to any one of claims 36 to 53, and the second node is the apparatus according to any one of claims 54 to 70; or the first node is the apparatus according to claim 71, and the second node is the apparatus according to claim 72.

74. A computer-readable storage medium, wherein the computer-readable storage medium stores a computer program, and the computer program is executed by a processor to implement the method according to any one of claims 1 to 18; or the computer program is executed by a processor to implement the method according to any one of claims 19 to 35.

75. A terminal, wherein the terminal comprises the apparatus according to any one of claims 36 to 53; or the terminal comprises the apparatus according to any one of claims 54 to 70.
